# EUROPEAN PATENT SPECIFICATION

(11) **EP 4 000 827 B1**
(45) Date of publication and mention of the grant of the patent: **12.03.2025**
(21) Application number: 20839687.9
(22) Date of filing: 04.06.2020
(51) Int. Cl.: B26D 3/08, H01M 8/0273, H01M 8/10, H01M 8/1004

(54) **DEVICE FOR MANUFACTURING MEMBRANE ELECTRODE ASSEMBLY, AND METHOD FOR MANUFACTURING MEMBRANE ELECTRODE ASSEMBLY**
VORRICHTUNG ZUR HERSTELLUNG EINER MEMBRANELEKTRODENANORDNUNG UND VERFAHREN ZUR HERSTELLUNG EINER MEMBRANELEKTRODENANORDNUNG
DISPOSITIF DE FABRICATION D'UN ENSEMBLE D'ÉLECTRODES À MEMBRANE ET PROCÉDÉ DE FABRICATION D'UN ENSEMBLE D'ÉLECTRODES À MEMBRANE

(30) Priority: 17.07.2019 JP 2019131570
(43) Date of publication of application: 25.05.2022
(73) Proprietor: SCREEN Holdings Co., Ltd., Kyoto-shi, Kyoto 602-8585 (JP)
(72) Inventor: YANAGISAWA, Nobuo, Kyoto-shi, Kyoto 602-8585 (JP); TAKAGI, Yoshinori, Kyoto-shi, Kyoto 602-8585 (JP); OKADA, Hiroshi, Kyoto-shi, Kyoto 602-8585 (JP)
(74) Representative: Goddar, Heinz J.
(86) International application number: PCT/JP2020/022133
(87) International publication number: WO 2021/010046

(56) References cited:
- JP-A- 2017 004 809
- JP-A- 2018 098 108
- US-A- 5 819 620

## Description

### Technical Field

The present invention relates to a manufacturing device for a membrane electrode assembly and a manufacturing method for a membrane electrode assembly.

### Background Art

Fuel cells have attracted attention as driving power sources for automobiles, mobiles phones, etc. Fuel cells are power generation systems of generating power using electrochemical reaction between hydrogen (H₂) contained in fuel and oxygen (O₂) in the air. Fuel cells have an advantage of achieving higher power generation efficiency and placing lower load on environment than other types of batteries.

There are some types of fuel cells responsive to electrolytes to be used. One of such fuel cells is a polymer electrolyte fuel cell (PEFC) using an ion-exchange membrane as an electrolyte (electrolyte membrane). The polymer electrolyte fuel cell achieves operation at ordinary temperatures and reduction in size and weight, so that it is expected to be applied to automobiles or portable devices.

The polymer electrolyte fuel cell generally has a configuration with a stack of a plurality of cells. One of the cells is formed by holding a membrane electrode assembly (MEA) between separators in a pair from opposite sides. The membrane electrode assembly includes an electrolyte membrane and electrode layers in a pair formed on opposite surfaces of the electrolyte membrane. One of the electrode layers in a pair is an anode electrode, and the other is a cathode electrode. As fuel gas containing hydrogen contacts the anode electrode and air contacts the cathode electrode, electrochemical reaction is caused to generate power.

For manufacture of such a membrane electrode assembly, Patent Literature 1 discloses an electrode manufacturing device including a rotary die cutter that includes a die roll with a blade, and an anvil roll. According to the disclosure of this electrode manufacturing device, an electrode material is caught between the die roll and the anvil roll and the die roll with the blade is rotated, thereby providing cut-out portions continuously in the electrode material.

### Citation List

### Patent Literature

Patent Literature 1: Japanese Patent Application Laid-Open No. 2017-196669

### Summary of Invention

### Technical Problem

According to the conventional technique, however, the position of the die roll with the blade is fixed relative to the electrode material. This makes it hard to adjust the position of the blade relative to the electrode material. Hence, the occurrence of positional deviation of the blade causes a risk that a cut-out portion will be formed at an inappropriate position

It is an object of the present invention to provide a technique of providing a cut-out portion at an appropriate position of an electrode layer base material.

### Solution to Problem

To solve the above-described problem, a first aspect is intended for a manufacturing device for a membrane electrode assembly comprising: a suction stage that sucks an electrode layer base material from an elongated strip-shaped first backsheet, the electrode layer base material including the first backsheet, an electrolyte membrane, and a first catalyst layer provided on a part of a surface of the electrolyte membrane arranged in the order named; a cylindrical rotary die cutter with a blade used for forming a cut-out portion in the electrode layer base material along a cutting target line around the first catalyst layer; a rotary drive part that rotates the rotary die cutter about a rotary shaft; and a movement drive part that moves the rotary die cutter relative to the suction stage to a half-cut position where the blade reaches an intermediate portion of the first backsheet in a thickness direction at the electrode layer base material sucked by the suction stage when the rotary die cutter rotates.

According to a second aspect, in the manufacturing device for the membrane electrode assembly according to the first aspect, the electrode layer base material further includes a second catalyst layer provided on a part of a surface of the electrolyte membrane adjacent to the first backsheet and overlapping the first catalyst layer in a thickness direction.

According to a third aspect, in the manufacturing device for the membrane electrode assembly according to the first or second aspect, the rotary shaft is arranged in a width direction orthogonal to a longitudinal direction of the electrode layer base material sucked by the suction stage.

According to a fourth aspect, the manufacturing device for the membrane electrode assembly according to any one of the first to third aspects further comprises a position determination part that determines the position of the first catalyst layer, wherein the movement drive part moves the rotary die cutter to the half-cut position responsive to the position of the first catalyst layer determined by the position determination part.

According to a fifth aspect, the manufacturing device for the membrane electrode assembly according to the fourth aspect further comprises an imaging part that captures an image of the first catalyst layer of the electrode layer base material, wherein the position determination part determines the position of the first catalyst layer on the basis of an image acquired by the imaging part.

According to a sixth aspect, in the manufacturing device for the membrane electrode assembly according to any one of the first to fifth aspects, the suction stage includes: a suction groove provided at a surface of the suction stage for suction of the electrode layer base material; and a suction hole provided inside the suction groove and used for suction of atmosphere.

According to a seventh aspect, in the manufacturing device for the membrane electrode assembly according to the sixth aspect, the suction groove includes a recess extending in a direction intersecting the cutting target line.

According to an eighth aspect, the manufacturing device for the membrane electrode assembly according to the seventh aspect further comprises a transport mechanism that transports the electrode layer base material while moving and stopping the electrode layer base material alternately on the suction stage, wherein while the transport mechanism stops the electrode layer base material, the movement drive part moves the rotary die cutter to the half-cut position.

A ninth aspect is intended for a manufacturing method for a membrane electrode assembly comprising: (a) a step of preparing an electrode layer base material including an elongated strip-shaped first backsheet, an elongated strip-shaped electrolyte membrane provided on one side of the first backsheet, and a first catalyst layer provided on a part of a surface of the electrolyte membrane on one side; (b) a step of sucking the electrode layer base material from a side with the first backsheet to a suction stage; (c) a step of moving a cylindrical rotary die cutter with a blade relative to the suction stage to a half-cut position, the blade having a shape responsive to a cutting target line defined around the first catalyst layer; and (d) a step of forming a cut-out portion in the electrode layer base material along the cutting target line by rotating the rotary die cutter at the half-cut position about a rotary shaft to cause the blade to reach an intermediate portion of the first backsheet in a thickness direction from one side of the first catalyst layer.

### Advantageous Effects of Invention

The manufacturing device for the membrane electrode assembly according to the first aspect allows movement of the rotary die cutter relative to the suction stage. This allows movement of the blade of the rotary die cutter relative to the electrode layer base material. Thus, it becomes possible to form the cut-out portion at an appropriate position of the electrode layer base material.

The manufacturing device for the membrane electrode assembly according to the second aspect allows formation of the cut-out portion at an appropriate position of the electrode layer base material with the second catalyst layer.

The manufacturing device for the membrane electrode assembly according to the third aspect makes it possible to form the cut-out portion in the electrode layer base material efficiently by moving the rotary die cutter in the longitudinal direction relative to the suction stage using the movement drive part, while rotating the rotary die cutter using the rotary drive part.

In the manufacturing device for the membrane electrode assembly according to the fourth aspect, as the position of the first catalyst layer is determined, it becomes possible to improve the accuracy of a position where the cut-out portion is to be formed.

The manufacturing device for the membrane electrode assembly according to the fifth aspect allows the position of the first catalyst layer to be determined on the basis of an image acquired by the imaging part.

In the manufacturing device for the membrane electrode assembly according to the sixth aspect, as the electrode layer base material is sucked along the suction groove, it becomes possible to alleviate deviation of the position of the electrode layer base material during formation of the cut-out portion.

In the manufacturing device for the membrane electrode assembly according to the seventh aspect, as the suction groove extends in a direction intersecting the cutting target line in the electrode layer base material, it becomes possible to suck opposite portions of the electrode layer base material across the cutting target line into the suction groove. Thus, a portion of the electrode layer base material in abutting contact with the blade is held fixedly to allow the cut-out portion to be formed accurately in the electrode layer base material.

In the manufacturing device for the membrane electrode assembly according to the eighth aspect, the rotary die cutter is moved to the half-cut position while transport of the electrode layer base material is stopped. This makes it possible to improve the accuracy of a position where the cut-out portion is to be formed.

The manufacturing method for the membrane electrode assembly according to the ninth aspect allows movement of the rotary die cutter relative to the suction stage. This allows movement of the blade of the rotary die cutter relative to the electrode layer base material. Thus, it becomes possible to form the cut-out portion at an appropriate position of the electrode layer base material.

### Brief Description of Drawings

Fig. 1 shows the configuration of a gasket applicator according to an embodiment;
Fig. 2 is a longitudinal sectional view and a plan view schematically showing an electrode layer base material 8 sent from a first supply roller;
Fig. 3 is a longitudinal sectional view and a plan view schematically showing the electrode layer base material with a cut-out portion;
Fig. 4 is a longitudinal sectional view and a plan view schematically showing the electrode layer base material 8 from which a portion of a membrane electrode assembly layer in a non-adopted region is separated;
Fig. 5 is a longitudinal sectional view and a plan view schematically showing a subgasket base material;
Fig. 6 is a longitudinal sectional view and a plan view schematically showing the subgasket base material from which a portion of a cover film in a non-corresponding region is separated;
Fig. 7 is a longitudinal sectional view schematically showing the electrode layer base material and the subgasket base material to be bonded to each other by a bonding mechanism;
Fig. 8 is a longitudinal sectional view and a plan view showing an assembly sheet with subgasket and a membrane electrode assembly with subgasket;
Fig. 9 is a block diagram showing electrical connection between a controller and each unit in the gasket applicator;
Fig. 10 schematically shows a first half-cut part on a +X side;
Fig. 11 schematically shows the first half-cut part on the +X side;
Fig. 12 schematically shows the first half-cut part on a -Y side;
Fig. 13 schematically shows an X direction drive section of the first half-cut part;
Fig. 14 is a plan view showing a suction surface of a suction stage;
Fig. 15 is a plan view showing the electrode layer base material sucked on the suction surface of the suction stage;
Fig. 16 is a side view schematically showing the bonding mechanism;
Fig. 17 is a side view schematically showing the bonding mechanism;
Fig. 18 is a plan view schematically showing the membrane electrode assembly on the electrode layer base material; and
Fig. 19 shows a flow of a bonding process performed by the bonding mechanism.

### Description of Embodiments

An embodiment of the present invention will be described below by referring to the drawings. Constituting elements in the embodiment are described merely as examples, and the scope of the present invention is not to be limited only to these elements. To facilitate understanding, the size of each part or the number of such parts in the drawings may be illustrated in an exaggerated or simplified manner, if appropriate.

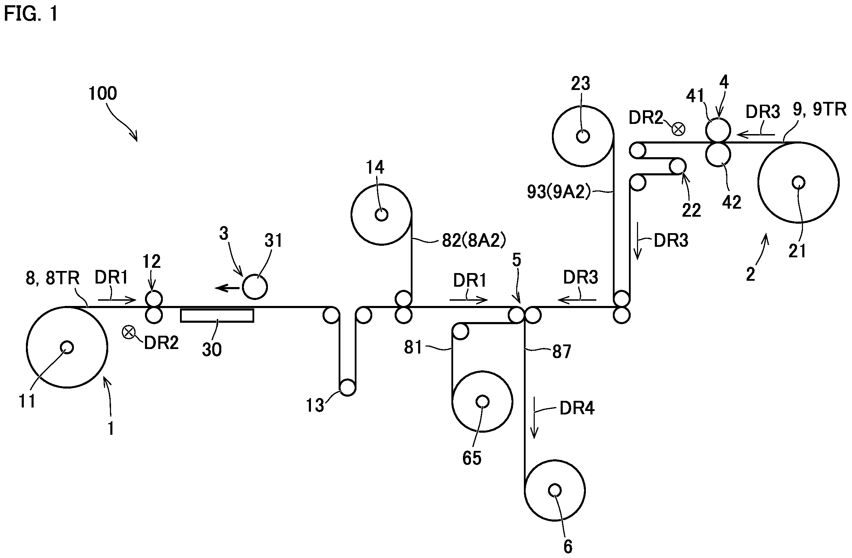

Fig. 1 shows the configuration of a gasket applicator 100 according to the embodiment. The gasket applicator 100 is a device to manufacture a membrane electrode assembly with subgasket by applying a subgasket base material 9 with a subgasket film 92 to an electrode layer base material 8 with a membrane electrode assembly layer 80.

The gasket applicator 100 includes a first transport mechanism 1, a second transport mechanism 2, a first half-cut part 3, a second half-cut part 4, a bonding mechanism 5, a sheet collection roller 6, and a controller 7.

### <First transport mechanism 1>

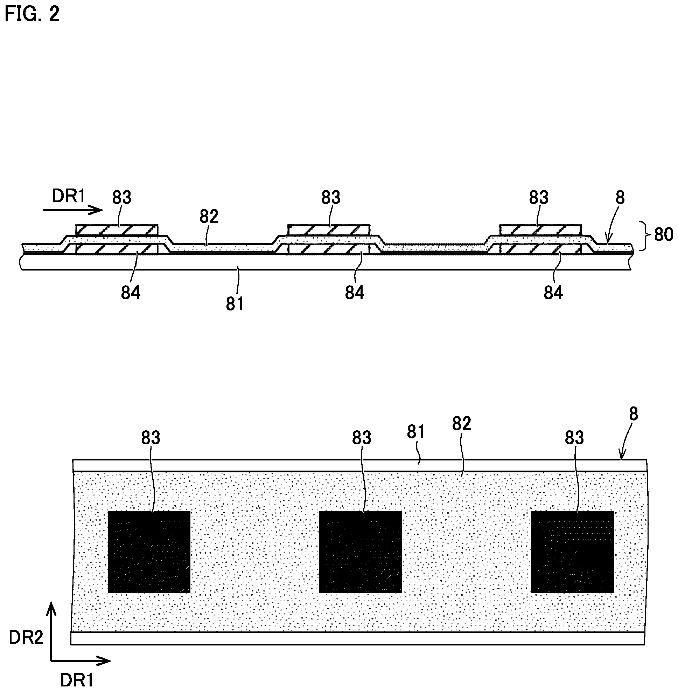

The first transport mechanism 1 transports an elongated strip-shaped electrode layer base material 8 (see Fig. 2) toward the bonding mechanism 5 along a fixed transport path 8TR while supporting the electrode layer base material 8 with a plurality of rollers. The first transport mechanism 1 includes a first supply roller 11, a first feed roller 12, and a first dancer roller 13. The first transport mechanism 1 includes an electrolyte membrane collection roller 14 that collects a portion (a non-adopted region 8A2 of an electrolyte membrane 82 described later) by winding detached from the electrode layer base material 8 along the transport path 8TR.

In the present embodiment, a movement direction in which the electrode layer base material 8 is moved by the first transport mechanism 1 toward the bonding mechanism 5 will be called a transport direction DR1, and a direction orthogonal to the transport direction DR1 and parallel to a main surface (a surface of the largest area) of the electrode layer base material 8 will be called a width direction DR2. A side along the transport path 8TR closer to the first supply roller 11 is defined as an upstream side of the transport direction DR1, and a side along the transport path 8TR closer to the bonding mechanism 5 is defined as a downstream side of the transport direction DR1. The transport direction DR1 agrees with the longitudinal direction of the electrode layer base material 8.

Fig. 2 is a longitudinal sectional view and a plan view schematically showing the electrode layer base material 8 sent from the first supply roller 11. As shown in Fig. 2, the electrode layer base material 8 includes an elongated strip-shaped first backsheet 81, and an elongated strip-shaped electrolyte membrane 82 provided on the upper surface (one side surface) of the first backsheet 81. The electrolyte membrane 82 has an upper surface on which rectangular first catalyst layers 83 are formed at regular intervals, and a lower surface (other side surface) on which a plurality of second catalyst layers 84 is formed to overlap the respective first catalyst layers 83 in a thickness direction. In the electrode layer base material 8, the second catalyst layer 84 is caught between the electrolyte membrane 82 and the first backsheet 81. The electrode layer base material 8 is manufactured in advance by an external device not shown in the drawings, and is prepared in a state of being wound in a roll shape on the first supply roller 11. The electrolyte membrane 82, a plurality of the first catalyst layers 83, and a plurality of the second catalyst layers 84 form the membrane electrode assembly layer 80. The first backsheet 81 and the electrolyte membrane 82 are attached to each other.

For example, a fluorine-based or hydrocarbon-based polyelectrolyte membrane is used as the electrolyte membrane 82. Specific examples of the electrolyte membrane 82 include polyelectrolyte membranes containing perfluorocarbon sulfonic acid (for example, Nafion (registered trademark) available from DuPont US), Flemion (registered trademark) available from AGC Inc., Aciplex (registered trademark) available from AGC Inc., and Goreselect (registered trademark) available from W. L. Gore & Associates). The electrolyte membrane 82 has a thickness from 5 to 30 µm, for example. While the electrolyte membrane 82 swells with moisture in the air, it contracts with reduction in the moisture. Namely, the electrolyte membrane 82 has a property of being deformed easily in response to the moisture in the air.

The first backsheet 81 is a film for suppressing the deformation of the electrolyte membrane 82. As a material of the first backsheet 81, resin higher in mechanical strength and more excellent in shape retaining function than the electrolyte membrane 82 is used. For example, polyethylene naphthalate (PEN) or polyethylene terephthalate (PET) is used preferably as a material of the first backsheet 81. The first backsheet 81 has a thickness from 25 to 100 µm, for example.

As shown in Fig. 2, the first backsheet 81 has a width slightly greater than the width of the electrolyte membrane 82. The electrolyte membrane 82 is formed at the center of the first backsheet 81 in the width direction. The first catalyst layer 83 has a width less than the width of the electrolyte membrane 82. The first and second catalyst layers 83 and 84 are formed at the center of the upper surface and the center of the lower surface respectively of the electrolyte membrane 82 in the width direction.

A material to cause fuel cell reaction at an anode or a cathode of a polymer electrolyte fuel cell is used as a material of the first and second catalyst layers 83 and 84. For example, catalyst particles of platinum (Pt), a platinum alloy, or a platinum compound are used as a material of the first and second catalyst layers 83 and 84. For example, the platinum alloy may be an alloy of at least one type of metals selected from a group constituting of ruthenium (Ru), palladium (Pd), nickel (Ni), molybdenum (Mo), iridium (Ir), and Iron (Fe), and platinum. Generally, platinum is used as a material of a catalyst layer for a cathode, and a platinum alloy is used as a catalyst layer for an anode.

As shown in Fig. 1, the first feed roller 12 includes two roller bodies arranged in such a manner as to contact each other. In the first feed roller 12, while the electrode layer base material 8 is caught between these two roller bodies, the two roller bodies rotate to pull out the electrode layer base material 8 from the first supply roller 11. The first feed roller 12 is configured to be capable of rotating actively in response to a control signal from the controller 7. When the rotation of the first feed roller 12 is stopped, sending of the electrode layer base material 8 from the first supply roller 11 is stopped to stop transport of the electrode layer base material 8 into the first half-cut part 3 and transport of the electrode layer base material 8 out of the first half-cut part 3.

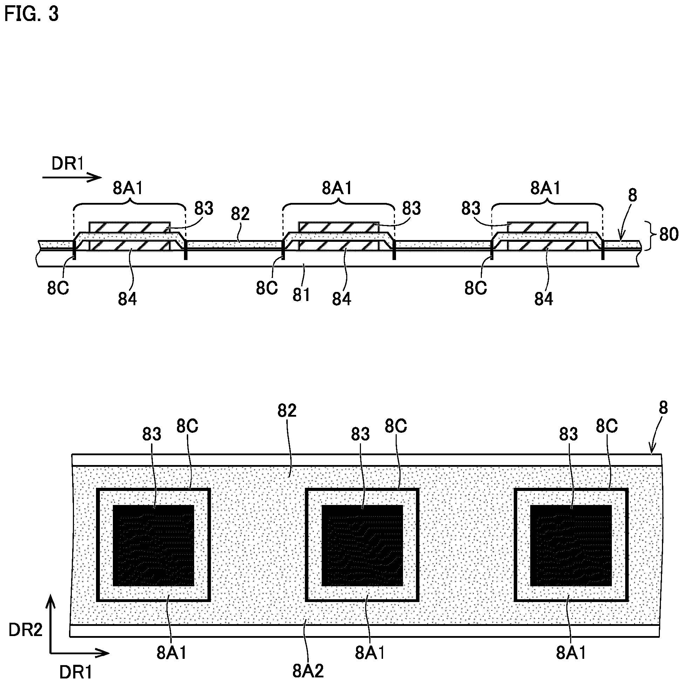

Fig. 3 is a longitudinal sectional view and a plan view schematically showing the electrode layer base material 8 with a cut-out portion 8C. The first half-cut part 3 is arranged downstream from the first feed roller 12. As shown in Fig. 3, the first half-cut part 3 is a processing part that performs a process of cutting the membrane electrode assembly layer 80 of the electrode layer base material 8 sent from the first supply roller 11 into an adopted region 8A1 and a non-adopted region 8A2 (first half-cut process). The configuration of the first half-cut part 3 will be described later.

As shown in Fig. 3, the cut-out portion 8C is formed by cutting the electrolyte membrane 82 into a rectangular shape surrounding a single first catalyst layer 83 and a single second catalyst layer 84 on the back side of this first catalyst layer 83. The cut-out portion 8C is defined by a cutting plane penetrating the electrolyte membrane 82 from the upper surface to the lower surface thereof. The cut-out portion 8C does not penetrate the first backsheet 81 but is defined by a cutting plane extending from the upper surface to an intermediate portion of the first backsheet 81 in the thickness direction. Namely, the cut-out portion 8C does not reach the lower surface of the first backsheet 81.

In order to apply constant tension on the electrode layer base material 8, the first dancer roller 13 moves up and down (in a direction orthogonal to the main surface of the electrode layer base material 8) in response to tension on the electrode layer base material 8. By the upward and downward movement of the first dancer roller 13, abrupt variation in the tension on the electrode layer base material 8 is absorbed.

The electrolyte membrane collection roller 14 collects by winding up a portion of the electrode layer base material 8 that in the non-adopted area 8A2 of the membrane electrode junction layer 80. The non-adopted region 8A2 is a portion of the elongated strip-shaped electrolyte membrane 82 other than the adopted region 8A1. The non-adopted region 8A2 of the electrolyte membrane 82 is detached from the electrode layer base material 8 at a position downstream from the first half-cut part 3, and is then wound on the electrolyte membrane collection roller 14.

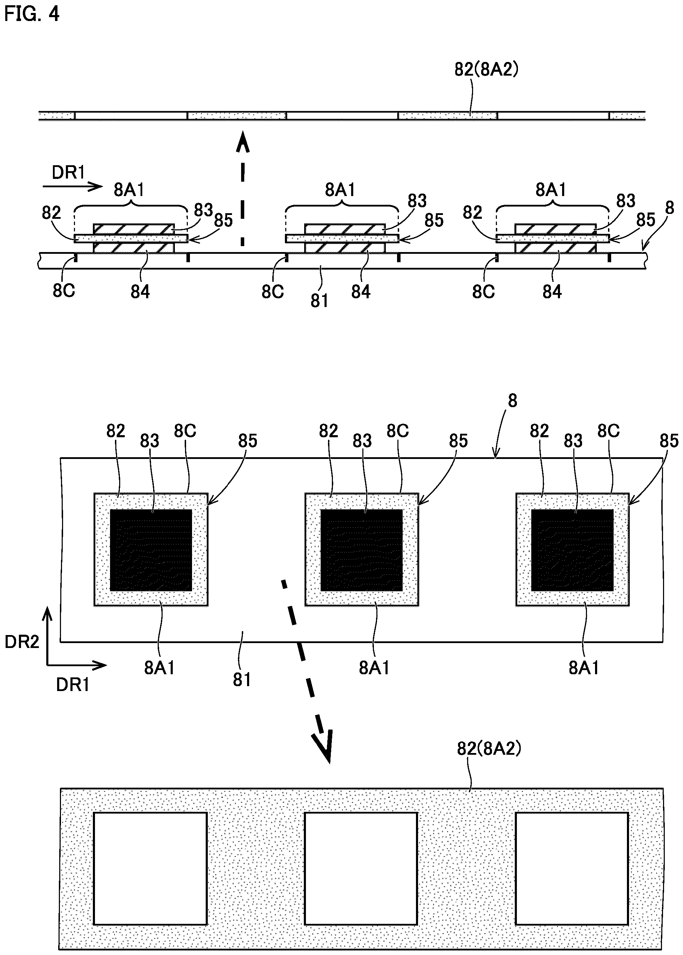

Fig. 4 is a longitudinal sectional view and a plan view schematically showing the electrode layer base material 8 from which a portion of the membrane electrode assembly layer 80 in the non-adopted region 8A2 is separated As shown in Fig. 4, by collecting the non-adopted region 8A2 of the electrolyte membrane 82 from the electrode layer base material 8 using the electrolyte membrane collection roller 14, a single membrane electrode assembly 85 is left on the upper surface of the first backsheet 81 that is composed of a portion of the electrolyte membrane 82 in the adopted region 8A1, and a single first catalyst layer 83 and a single second catalyst layer 84 formed on the upper surface and the lower surface respectively of this portion of the electrolyte membrane 82. The membrane electrode assembly 85 is transported together with the first backsheet 81 toward the bonding mechanism 5.

### <Second transport mechanism 2>

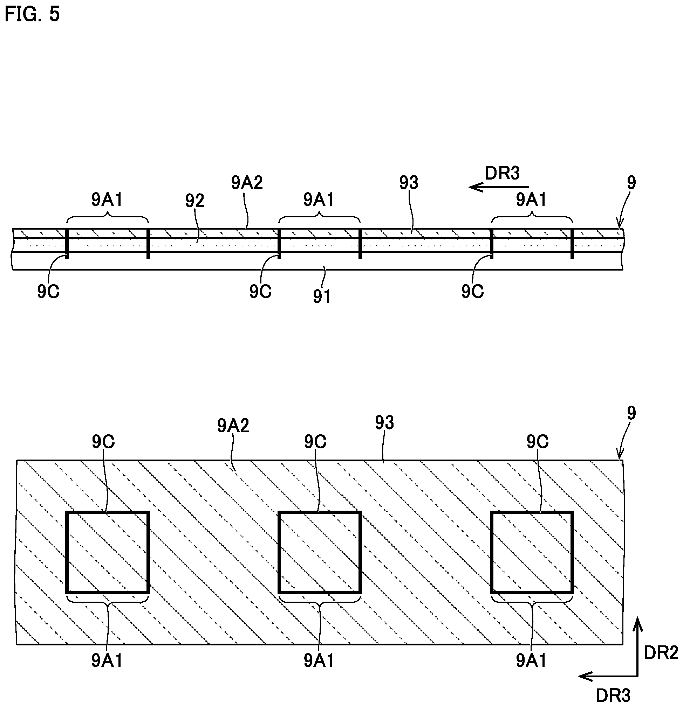

The second transport mechanism 2 transports the elongated strip-shaped subgasket base material 9 (see Fig. 5) toward the bonding mechanism 5 along a fixed transport path 9TR while supporting the subgasket base material 9 with a plurality of rollers. The second transport mechanism 2 includes a second supply roller 21 and a second dancer roller 22. The second transport mechanism 2 further includes a cover film collection roller 23 that collects an unnecessary portion by winding detached from the subgasket base material 9 on the transport path 9TR.

In the present embodiment, a movement direction in which the subgasket base material 9 is moved by the second transport mechanism 2 toward the bonding mechanism 5 will be called a transport direction DR3. A side along the transport path 9TR closer to the first supply roller 11 is defined as an upstream side of the transport direction DR3, and a side along the transport path 9TR closer to the bonding mechanism 5 is defined as a downstream side of the transport direction DR3. The transport direction DR3 agrees with the longitudinal direction of the subgasket base material 9. A direction orthogonal to the transport direction DR3 and parallel to a main surface (a surface of the largest area) of the subgasket base material 9 agrees with the width direction DR2.

Fig. 5 is a longitudinal sectional view and a plan view schematically showing the subgasket base material 9. The subgasket base material 9 shown in Fig. 5 is provided with a cut-out portion 9C. The cut-out portion 9C is to be formed by the second half-cut part 4 described later and does not exist immediately after sending from the second supply roller 21.

As shown in Fig. 5, the subgasket base material 9 includes an elongated strip-shaped second backsheet 91, the elongated strip-shaped subgasket film 92 formed on the upper surface (one side surface) of the second backsheet 91, and an elongated strip-shaped cover film 93 formed on the upper surface (one side surface) of the subgasket film 92. The subgasket base material 9 is manufactured in advance by an external device not shown in the drawings, and is prepared in a state of being wound in a roll shape on the second supply roller 21.

As a material of the subgasket film 92, resin higher in mechanical strength and more excellent in shape retaining function than the electrolyte membrane 82 is used preferably. Polyethylene terephthalate (PET), polyethylene naphthalate (PEN), polyphenylene sulfide (PPS), or polystyrene (PS) is used preferably as a material of the subgasket film 92. The subgasket film 92 has a thickness from 25 to 100 µm, for example.

In the subgasket base material 9, the upper surface (one side surface) of the second backsheet 91 is an adhesive surface in which a layer of an adhesive is formed. The adhesive is a pressure-sensitive adhesive, for example. The pressure-sensitive adhesive may be replaced with a thermosetting adhesive, a thermoplastic adhesive, or a UV-curable adhesive. This adhesive surface on the second backsheet 91 is covered with the subgasket film 92. Polyethylene naphthalate (PEN) or polyethylene terephthalate (PET) is used preferably as a material of the second backsheet 91. The second backsheet 91 has a thickness from 25 to 100 µm, for example.

In the subgasket base material 9, the upper surface (one side surface) of the subgasket film 92 is an adhesive surface in which a layer of an adhesive is formed. This adhesive surface on the subgasket film 92 is covered with the cover film 93. The cover film 93 is adhesively bonded under adhesive force of a degree allowing the cover film 93 to be detached easily from the subgasket film 92. While a material of the cover film 93 is not particularly limited, it is preferably polyethylene terephthalate (PET), for example.

In order to apply constant tension on the subgasket base material 9, the second dancer roller 22 moves from side to side (in a direction orthogonal to the main surface of the subgasket base material 9) in response to tension on the electrode layer base material 8. By the side-to-side movement of the second dancer roller 22, abrupt variation in the tension on the subgasket base material 9 is absorbed.

The second half-cut part 4 is provided between the second supply roller 21 and the second dancer roller 22. The second half-cut part 4 is a processing part that performs a process of cutting the cover film 93 and the subgasket film 92 of the subgasket base material 9 supplied from the second supply roller 21 into a corresponding region 9A1 and a non-corresponding region 9A2 (second half-cut process).

As shown in Fig. 5, the second half-cut process is to form the cut-out portion 9C in the subgasket base material 9. The cut-out portion 9C is formed along a boundary line (cutting target line 9T) between the rectangular corresponding region 9A1 and the non-corresponding region 9A2 other than the corresponding region 9A1. The corresponding region 9A1 has a similar shape and has a substantially equal size to the first catalyst layer 83, for example. The corresponding region 9A1 may be dissimilar in shape to the first catalyst layer 83. The corresponding region 9A1 may be larger than the first catalyst layer 83.

In this example, the second half-cut part 4 includes two upper and lower rollers 41 and 42 facing each other, and the subgasket base material 9 is passed between these two rollers 41 and 42. A pinnacle blade is provided on the outer peripheral surface of the roller 41 facing the cover film 93 of the subgasket base material 9. This pinnacle blade has a shape responsive to the shape (rectangular shape) of the corresponding region 9A1.

In the second half-cut part 4, the subgasket base material 9 is caught between the two rollers 41 and 42. Each of the rollers 41 and 42 rotates synchronously with a speed at which the subgasket base material 9 moves in the transport direction DR3. As the pinnacle blade on the outer peripheral surface of the roller 41 abuts on the subgasket base material 9, the cut-out portion 9C is formed in the subgasket base material 9. In this way, the subgasket base material 9 is cut into the corresponding region 9A1 and the non-corresponding region 9A2. The roller 41 has an outer periphery agreeing with an interval between the cut-out portions 9C (in other words, an interval between the corresponding regions 9A1) formed in the subgasket base material 9. For this reason, by the rotations of the rollers 41 and 42 synchronous with the movement of the subgasket base material 9, the cut-out portions 9C are formed at a constant pitch in the subgasket base material 9. Each of the rollers 41 and 42 is not always required to rotate at a speed synchronous with a movement speed of the subgasket base material 9. For example, when the pinnacle blade abuts on the subgasket base material 9, the roller 41 is rotated at a speed synchronous with a movement speed of the subgasket base material 9. When the pinnacle blade does not contact the subgasket base material 9, the roller 41 may be rotated at a higher speed than the movement speed of the subgasket base material 9. This makes it possible to shorten an interval between the cut-out portions 9C formed in the subgasket base material 9 to allow loss reduction in the subgasket base material 9.

The rollers 41 and 42 may be driven to rotate by frictional resistance generated by friction with the subgasket base material 9. In this case, the rollers 41 and 42 rotate synchronously with a movement speed of the subgasket base material 9 to eliminate the need for synchronous control by the controller 7. At least one of the rollers 41 and 42 may have a configuration of rotating actively in response to driving by a motor. In this case, the controller 7 may control the rotations of the rollers 41 and 42 to conform to a speed at which the subgasket base material 9 is moved by the second transport mechanism 2.

As shown in Fig. 5, the cut-out portion 9C is defined by a cutting plane penetrating the cover film 93 and the subgasket film 92. The cut-out portion 9C does not penetrate the second backsheet 91 but is defined by a cutting plane extending from the upper surface (one side surface) to an intermediate portion of the second backsheet 91 in the thickness direction. Namely, the cut-out portion 9C does not reach the lower surface (other side surface) of the second backsheet 91.

The cover film collection roller 23 collects a portion of the subgasket base material 9 provided with the cut-out portion 9C by winding. This portion is a portion of the cover film 93 in the non-corresponding region 9A2. The non-corresponding region 9A2 of the cover film 93 is detached from the subgasket base material 9 at a position between the second dancer roller 22 and the bonding mechanism 5 along the transport path 9TR, and is then collected on the cover film collection roller 23. The cover film collection roller 23 is an example of a detachment part.

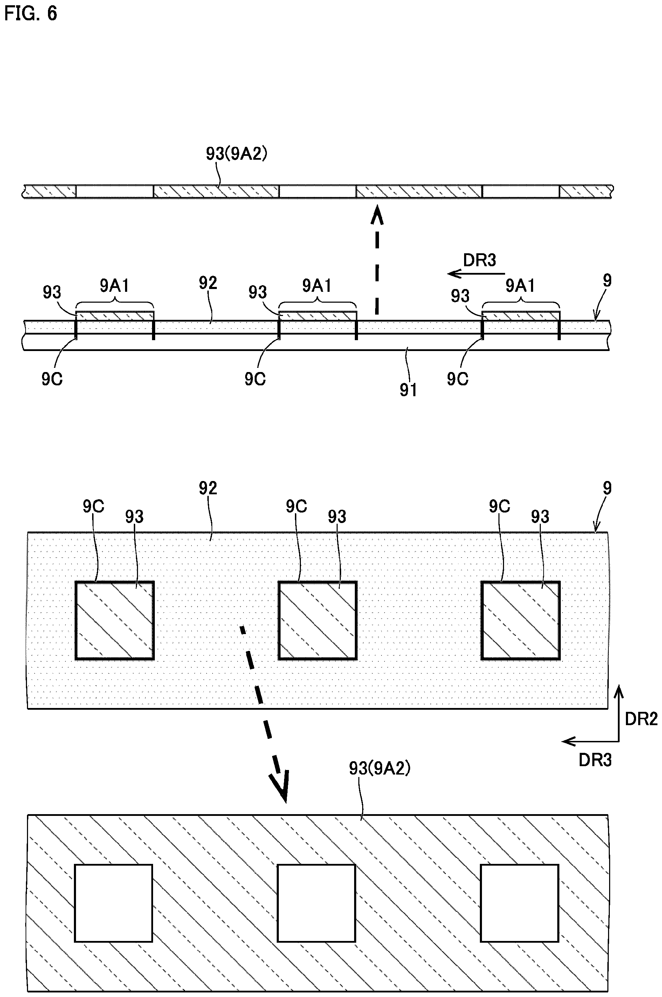

Fig. 6 is a longitudinal sectional view and a plan view schematically showing the subgasket base material 9 from which a portion of the cover film 93 in the non-corresponding region 9A2 is separated. As shown in Fig. 6, as a result of separation of the portion of the cover film 93 in the non-corresponding region 9A2, a rectangular portion that is the corresponding region 9A1 of the cover film 93 is left on the upper surface of the subgasket film 92. This rectangular portion is transported together with the second backsheet 91 and the subgasket film 92 to the bonding mechanism 5.

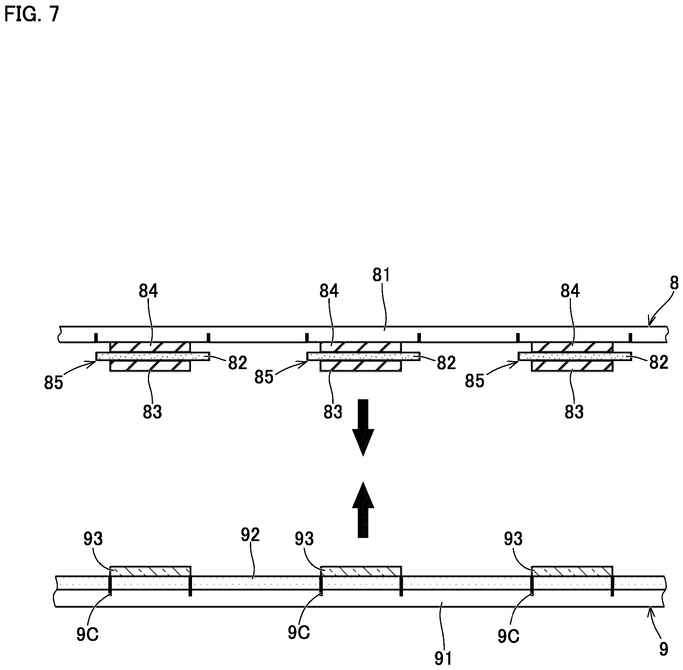

Fig. 7 is a longitudinal sectional view schematically showing the electrode layer base material 8 and the subgasket base material 9 to be bonded to each other by the bonding mechanism 5. As shown in Fig. 7, the bonding mechanism 5 is for bonding between the electrode layer base material 8 from which a portion of the electrolyte membrane 82 in the non-adopted region 8A2 is separated (see Fig. 4) and the subgasket base material 9 from which a portion of the cover film 93 in the non-corresponding region 9A2 is separated. In this case, the electrode layer base material 8 and the subgasket base material 9 are bonded to each other in such a manner as to align the upper surface of the first catalyst layer 83 of the membrane electrode assembly 85 at the electrode layer base material 8 with the upper surface of the cover film 93 of the subgasket base material 9. The electrolyte membrane 82 forming a part of the membrane electrode assembly 85 at the electrode layer base material 8 and existing in the periphery of the first catalyst layer 83 is adhesively bonded to a surface (adhesive surface) of the subgasket film 92 existing in the periphery of the cover film 93 at the subgasket base material 9.

In the present embodiment, the subgasket base material 9 has the cut-out portion 9C formed in the corresponding region 9A1 corresponding to the first catalyst layer 83 while extending to an intermediate portion of the second backsheet 91 in the thickness direction, and the subgasket base material 9 is bonded to the electrode layer base material 8. Namely, the subgasket base material 9 is bonded to the electrode layer base material 8 while the corresponding region 9A1 is not cut out from the subgasket base material 9. This makes it possible to maintain high rigidity of the subgasket film 92 before the bonding to reduce the occurrence of creases in the subgasket film 92.

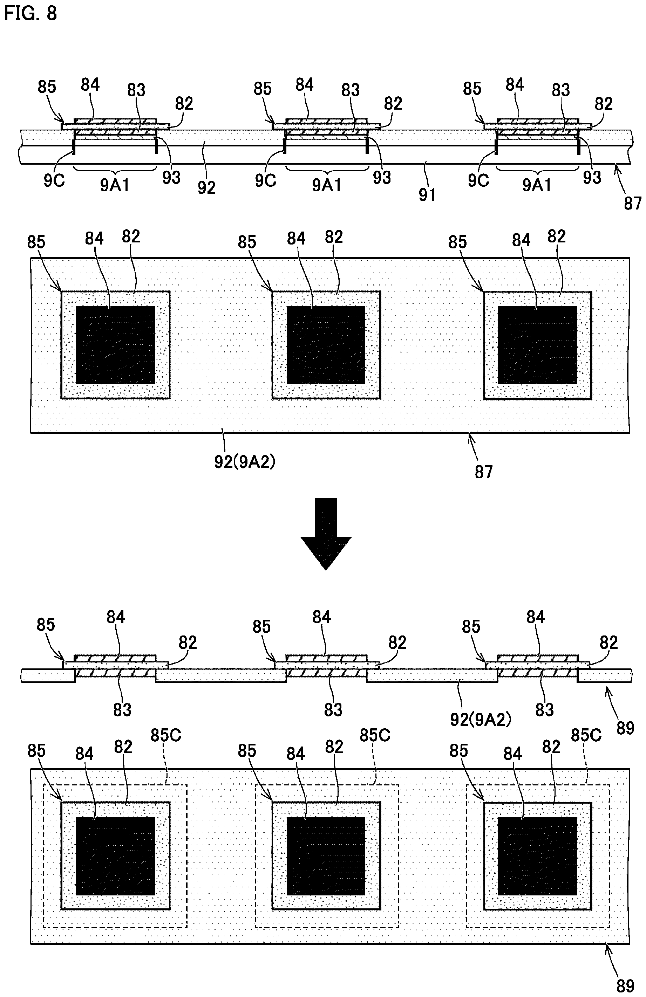

A first backsheet collection roller 65 collects the first backsheet 81 by winding detached from the electrode layer base material 8 after the electrode layer base material 8 is bonded to the subgasket base material 9 by the bonding mechanism 5. The first backsheet 81 is detached from the electrode layer base material 8 at a position between the bonding mechanism 5 and the sheet collection roller 6. As a result, an assembly sheet with subgasket 87 (see Fig. 8) is formed.

Fig. 8 is a longitudinal sectional view and a plan view showing the assembly sheet with subgasket 87 and a membrane electrode assembly with subgasket 89. The assembly sheet with subgasket 87 has a configuration in which the subgasket base material 9 is attached to one side of the membrane electrode assembly 85. In the assembly sheet with subgasket 87, a portion of the subgasket film 92 in the corresponding region 9A1, and additionally, a portion of the cover film 93 in the corresponding region 9A1 are applied to the first catalyst layer 83, as well as to the periphery of the first catalyst layer 83 of the membrane electrode assembly 85. This achieves higher rigidity of the electrolyte membrane 82 and that of the first catalyst layer 83 (also that of the second catalyst layer 84). As a result, it becomes possible to reduce the occurrence of deformation such as creases at the above-described portions.

The assembly sheet with subgasket 87 is collected by being wound in a roll shape on the sheet collection roller 6. The assembly sheet with subgasket 87 is wound on the sheet collection roller 6 with a surface thereof closer to the second backsheet 91 facing the outer peripheral surface of the sheet collection roller 6. This allows reduction in the occurrence of direct contact of the second catalyst layer 84 of the assembly sheet with subgasket 87 with the outer peripheral surface of the sheet collection roller 6.

As shown in Fig. 1, the sheet collection roller 6 collects the assembly sheet with subgasket 87 by winding. A motor not shown in the drawings is connected to a rotary shaft of the sheet collection roller 6 and the sheet collection roller 6 rotate sunder control by the controller 7.

As shown in Fig. 8, in detaching the second backsheet 91 from the assembly sheet with subgasket 87, it becomes possible to detach an unnecessary portion of the subgasket film 92 inside the cut-out portion 9C (a portion thereof in the corresponding region 9A1) and the cover film 93 together with detachment of the second backsheet 91. This makes it possible to provide the membrane electrode assembly with subgasket 89 with a portion of the subgasket film 92 in the non-corresponding region 9A2 as a frame body added to an edge of the membrane electrode assembly 85. Regarding the membrane electrode assembly with subgasket 89, by cutting the subgasket film 92 at a position of a break line 85C of a rectangular shape slightly greater than the membrane electrode assembly 85 as shown in Fig. 8, for example, it becomes possible to obtain a membrane electrode assembly with subgasket with a subgasket film like a frame added to one membrane electrode assembly 85.

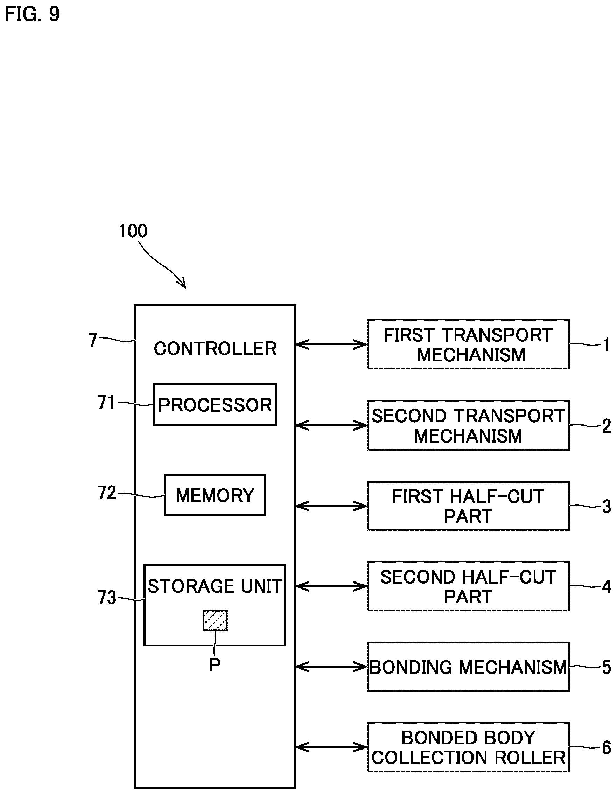

Fig. 9 is a block diagram showing electrical connection between the controller 7 and each unit in the gasket applicator 100. The controller 7 controls the operation of each unit in the gasket applicator 100. As conceptually shown in Fig. 9, the controller 7 is configured using a computer including a processor 71 such as a CPU, a memory 72 such as a RAM, and a storage unit 73 such as a hard disk drive. The storage unit 73 stores a computer program P installed for controlling the operation of the gasket applicator 100.

### <First half-cut part 3>

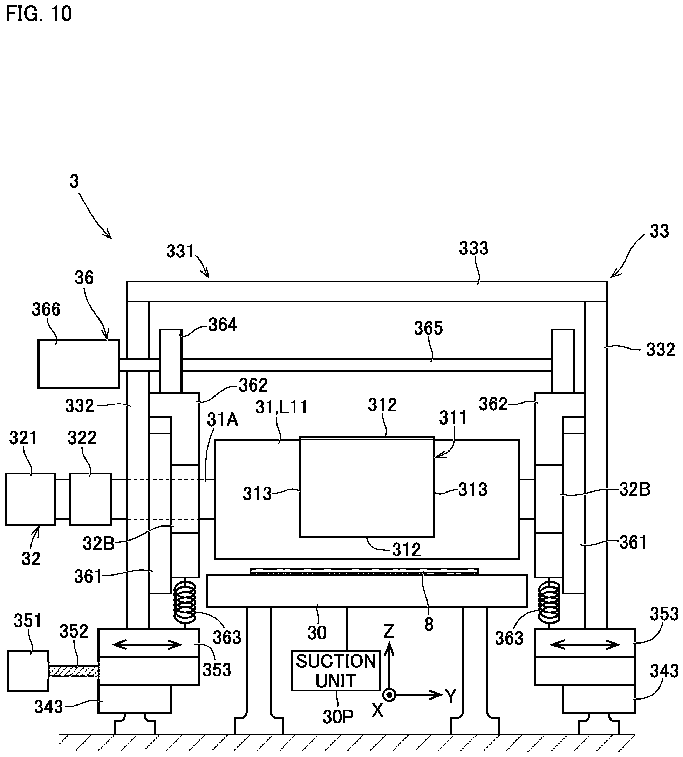

The configuration of the first half-cut part 3 will be described by referring to Figs. 10 to 13. For the convenience of description, arrows indicating an X direction, a Y direction, and a Z direction orthogonal to each other are given in Figs. 10 to 13. In the following description, a direction in which the tip of each arrow is pointed is defined as a + direction (positive direction), and a direction opposite to the former direction is defined as a - direction (negative direction). The X direction is parallel to the transport direction DR1, the Y direction is parallel to the width direction DR2, and the Z direction is vertical to the upper surface of the electrode layer base material 8. In this example, the X direction and the Y direction are parallel to a horizontal plane, and the Z direction is parallel to the vertical direction.

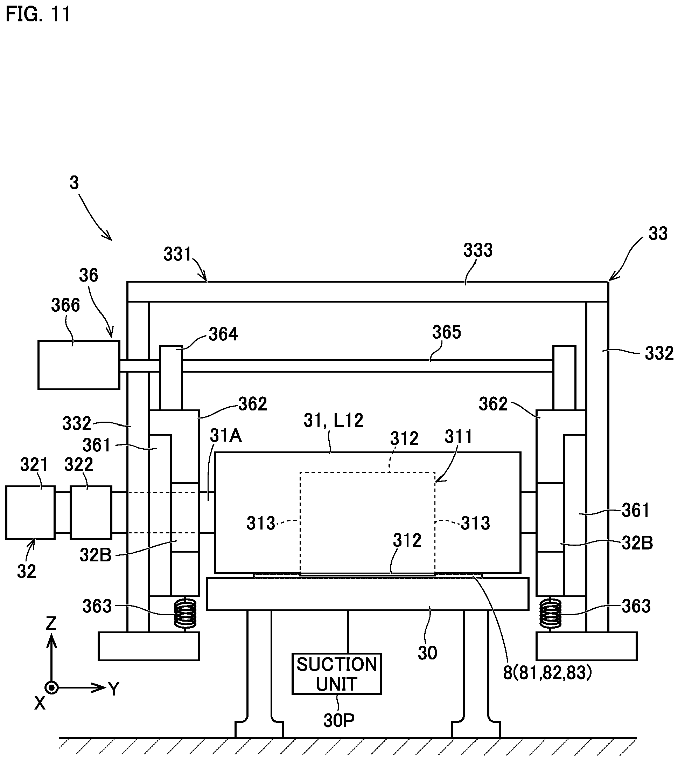

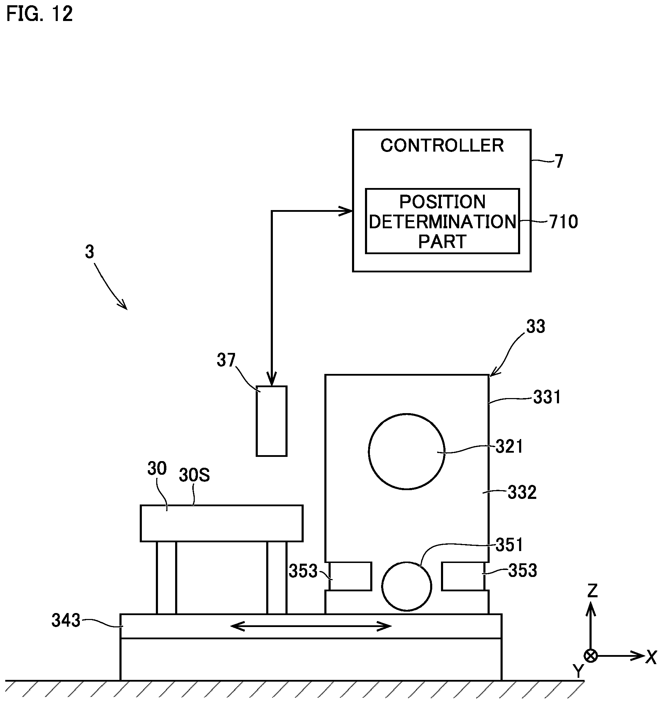

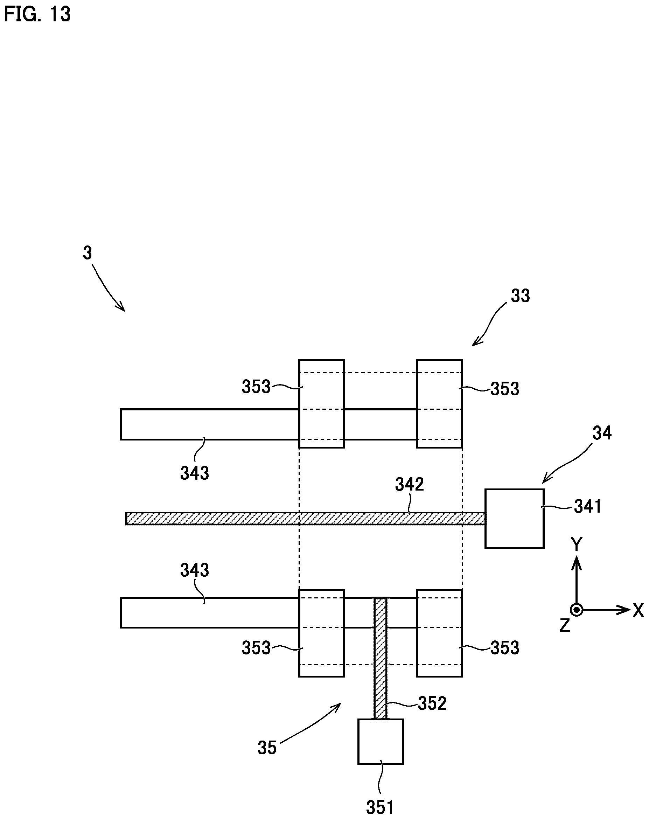

Fig. 10 schematically shows the first half-cut part 3 on the +X side. Fig. 11 schematically shows the first half-cut part 3 on the +X side. Fig. 12 schematically shows the first half-cut part 3 on the -Y side. Fig. 13 schematically shows an X direction drive section 34 of the first half-cut part 3.

The first half-cut part 3 is a device that performs the first half-cut process of forming the rectangular cut-out portion 8C (see Fig. 3) in the electrode layer base material 8 moving in the transport direction DR1. The first half-cut part 3 includes a suction stage 30, a rotary die cutter 31, a rotary drive part 32, and a movement drive part 33.

The suction stage 30 holds the electrode layer base material 8 under suction from the first backsheet 81. A suction surface (+Z side surface) of the suction stage 30 has a rectangular shape extending long in the X direction and extending short in the Y direction.

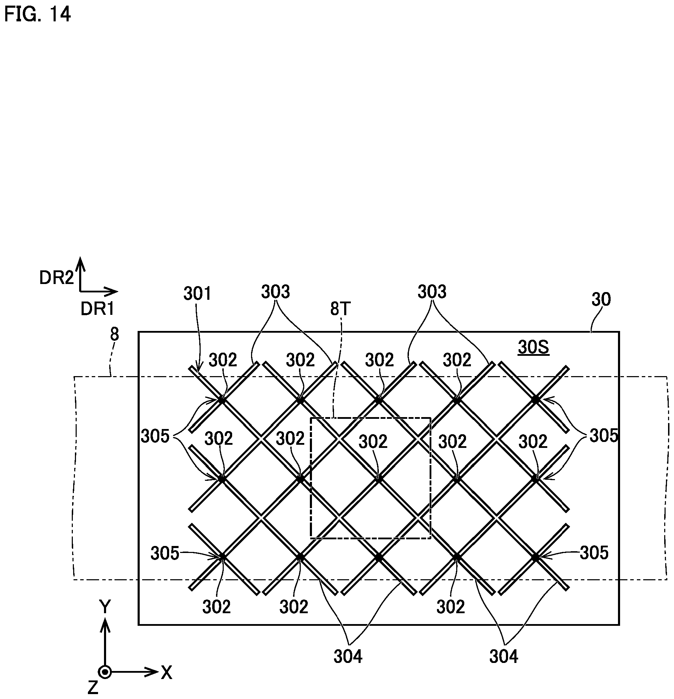

The rotary die cutter 31 is a cylindrical member to rotate about a rotary shaft 31A extending in the Y direction. The rotary die cutter 31 has an outer peripheral surface where a pinnacle blade 311 is provided. The pinnacle blade 311 is used for forming the cut-out portion 8C in the electrode layer base material 8 along a cutting target line 8T (see Fig. 14) around the first catalyst layer 83 of the electrode layer base material 8. In this example, the cut-out portion 8C has a square shape. In response to this, the pinnacle blade 311 is defined by two width direction portions 312 extending parallel to each other in the Y direction (width direction DR2), and two peripheral direction portions 313 extending parallel to each other in the peripheral direction of the rotary die cutter 31.

The movement drive part 33 includes a bridge-like body 331 holding the rotary die cutter 31, the X direction drive section 34 that moves the bridge-like body 331 in the X direction, a Y direction drive section 35 that moves the bridge-like body 331 in the Y direction, and a Z direction drive section 36 that moves the rotary die cutter 31 in the Z direction.

The bridge-like body 331 includes two columns 332 extending in the Z direction and arranged on the +Y side and the -Y side of the suction stage 30, and a beam 333 coupling the respective ends on the +Z side of the two columns 332. The rotary die cutter 31 is arranged between the two columns 332.

The movement drive part 33 moves the rotary die cutter 31 at least to a separated position L11 (see Fig. 10) and to a half-cut position L12 (see Fig. 11). As shown in Fig. 10, the rotary die cutter 31 at the separated position L11 is separated upward (+Z side) from the electrode layer base material 8 passing along the transport path 8TR above the suction stage 30. As shown in Fig. 11, with the rotary die cutter 31 at the half-cut position L12, by the rotation of the rotary die cutter 31, the pinnacle blade 311 abuts on the upper surface of the electrode layer base material 8 sucked on the suction stage 30, and the cut-out portion 8C becomes ready to be formed.

### <Z direction drive section 36>

The Z direction drive section 36 includes one Z direction guide 361, one lifting plate 362, one spring 363, and one eccentric cam 364 provided on each of the +Y side and the -Y side of the rotary die cutter 31. The Z direction drive section 36 includes a rotary shaft 365 extending in the Y direction, and a Z direction motor 366 to rotate the rotary shaft 365. The two eccentric cams 364 are attached to the rotary shaft 365.

The spring 363 is arranged between the lifting plate 362 and a Y direction guide 353 arranged closer to the -Z side than the lifting plate 362. The spring 363 is coupled to an end of the lifting plate 362 on the -Z side and biases the lifting plate 362 toward the +Z side. An end of the lifting plate 362 on the +Z side abuts on an end of the outer peripheral surface (cam surface) of the eccentric cam 364 on the -Z side. As the eccentric cam 364 rotates together with the rotary shaft 365, an end of the eccentric cam 364 on the -Z side is displaced in the Z direction. This further changes the position of the lifting plate 362 pressed with the eccentric cam 364 in the Z direction. The lifting plate 362 is coupled to the Z direction guide 361 extending in the Z direction and is displaced parallel to the vertical direction by the Z direction guide 361.

The opposite ends of the rotary shaft 31A of the rotary die cutter 31 are supported by the lifting plate 362 via a bearing 32B. Thus, the rotary die cutter 31 is moved in the Z direction together with the lifting plate 362.

### <Y direction drive section 35>

The Y direction drive section 35 includes a Y direction motor 351 that is a servo motor, a ball screw 352 extending in the Y direction, and four Y direction guides 353 extending in the Y direction (see Fig. 13). A portion of the bridge-like body 331 on the - Z side is coupled to each of the Y direction guides 353. The ball screw 352 is coupled to a nut member provided to a surface of the bridge-like body 331 on the -Y side (see Figs. 10 and 12). As the Y direction motor 351 rotates the ball screw 352, the bridge-like body 331 moves in the Y direction along the Y direction guides 353. This moves the rotary die cutter 31 in the Y direction.

### <X direction drive section 34>

The X direction drive section 34 includes an X direction motor 341 that is a servo motor, a ball screw 342 extending in the X direction, and two X direction guides 343 extending parallel to the X direction. The ball screw 342 is coupled to a surface of the bridge-like body 331 on the +X side. As the X direction motor 341 rotates the ball screw 342, the bridge-like body 331 moves in the X direction along the X direction guide 343. This moves the rotary die cutter 31 in the X direction.

### <Rotary drive part 32>

The rotary drive part 32 rotates the rotary die cutter 31 by rotating the rotary shaft 31A. The rotary drive part 32 includes a rotary motor 321 and a clutch 322.

The rotary motor 321 is coupled to an end of the rotary shaft 31A on the -Y side. As the rotary motor 321 rotates the rotary shaft 31A, the rotary die cutter 31 rotates about the rotary shaft 31A. The opposite portions of the rotary shaft 31A are supported by the lifting plates 362 on the +Y side and on the -Y side via the bearing 32B.

The clutch 322 is provided on the rotary shaft 31A between the rotary motor 321 and the rotary die cutter 31. The rotary shaft 31A is divided by the clutch 322 into a drive shaft (a shaft section closer to the rotary motor 321 than the clutch 322) and a driven shaft (a shaft section closer to the rotary die cutter 31 than the clutch 322). Connecting and disconnecting the drive shaft and the driven shaft using the clutch 322 allows switching between transmission and non-transmission of rotary drive power from the rotary motor 321 to the rotary die cutter 31. The clutch 322 is not an absolute necessity but is omissible.

The column 332 of the bridge-like body 331 on the -Y side has a through hole (not shown in the drawings) penetrating the column 332 in the Y direction and where the rotary shaft 31A is passed. This through hole has a shape allowing lifting movement of the rotary shaft 31A such as an oval shape extending long in the Z direction.

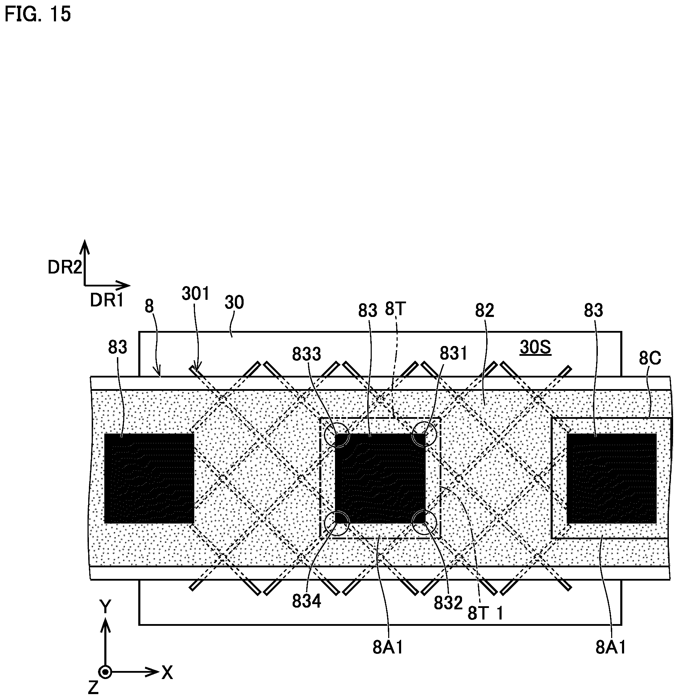

Fig. 14 is a plan view showing a suction surface 30S of the suction stage 30. Fig. 15 is a plan view showing the electrode layer base material 8 sucked on the suction surface 30S of the suction stage 30. The suction surface 30S (surface on the +Z side) of the suction stage 30 for suction of the electrode layer base material 8 is provided with a suction groove 301. A plurality of suction holes 302 for suction of atmosphere is provided inside the suction groove 301.

The suction groove 301 includes a plurality of first recesses 303 extending in the +Y direction toward the +X direction, and a plurality of second recesses 304 extending in the -Y direction toward the +X direction. These first recesses 303 and second recesses 304 intersect at a plurality of intersections 305 and are coupled to each other at the intersections 305. In the present embodiment, some of these intersections 305 are given the suction holes 302. Forming two or more suction holes 302 is not an absolute necessity but there may be one suction hole 302.

The suction hole 302 is connected via a suction pipe not shown in the drawings to a suction unit 30P (see Fig. 10) including a vacuum pump, etc. By the action of the suction unit 30P, surrounding atmosphere is sucked through the suction hole 302. The controller 7 controls a valve (not shown in the drawings) provided to the suction pipe to control start and stop of suction of atmosphere through the suction hole 302. When the controller 7 starts suction of atmosphere through the suction hole 302, the electrode layer base material 8 is sucked on the suction surface 30S of the suction stage 30. When the controller 7 stops suction of atmosphere through the suction hole 302, the electrode layer base material 8 is released from the suction to be separated upward (+Z side) from the suction stage 30.

The cutting target line 8T corresponding to the cut-out portion 8C formed in the electrode layer base material 8 by the first half-cut part 3 has a rectangular shape with portions parallel to the X direction and portions parallel to the Y direction. The suction groove 301 includes the first recesses 303 and the second recesses 304 intersecting the portions parallel to the X direction and the portions parallel to the Y direction of the cutting target line 8T.

As the electrode layer base material 8 can be sucked on the suction stage 30 along the suction groove 301, deviation of the electrode layer base material 8 is alleviated during implementation of the first half-cut process. Furthermore, the suction groove 301 includes a plurality of the first recesses 303 and a plurality of the second recesses 304 extending in directions intersecting the cutting target line 8T. This allows the electrode layer base material 8 to be held along the suction groove 301 crossing each portion of the cutting target line 8T in the electrode layer base material 8. Thus, even with the pinnacle blade 311 abutting on the electrode layer base material 8, a corresponding abutting portion of the electrode layer base material 8 can still be held fixedly on the suction stage 30. This allows the cut-out portion 8C to be formed accurately along the cutting target line 8T in the electrode layer base material 8.

As shown in Fig. 12, the first half-cut part 3 includes an imaging part 37. The imaging part 37 is arranged closer to the +Z side than the suction surface 30S of the suction stage 30. The imaging part 37 includes one, or two or more cameras with image sensors. The imaging part 37 captures an image of the first catalyst layer 83 at the electrode layer base material 8 sucked on the suction stage 30. The imaging part 37 is electrically connected to the controller 7, and transmits an image signal resulting from imaging to the controller 7.

As shown in Fig. 12, the controller 7 functions as a position determination part 710. The position determination part 710 is a function realized as software by causing the processor 71 to execute the computer program P. The position determination part 710 may be a hardware configuration such as an application-specific integrated circuit. The position determination part 710 determines the position of the first catalyst layer 83 (a barycenter position, for example) in an image acquired by the imaging part 37. Furthermore, the controller 7 sets the cutting target line 8T on the basis of the determined position of the first catalyst layer 83 and operates the movement drive part 33 in response to the set cutting target line 8T, thereby moving the rotary die cutter 31.

As shown in Fig. 15, for example, the position determination part 710 may determine four corners 831, 832, 833, and 834 of the first catalyst layer 83, and determine the barycenter position of the first catalyst layer 83 on the basis of the determined corner positions. In this case, the imaging part 37 may capture images of the corners 831 to 834 using a plurality of cameras. The imaging part 37 may capture images of the corners 831 to 834 simultaneously using one camera, or may acquire these images separately by imaging performed several times by moving this camera.

The position determination part 710 is not always required to determine the position of the first catalyst layer 83 on the basis of the positions of the corners 831 to 834. For example, the position determination part 710 may determine the positions of the four sides of the first catalyst layer 83, and may determine the position of the first catalyst layer 83 on the basis of the determined side positions.

The position determination part 710 may determine the position of the second catalyst layer 84. If the first backsheet 81 has transparency, for example, the imaging part 37 may be arranged adjacent to the first backsheet 81 of the electrode layer base material 8 and an image of the second catalyst layer 84 may be captured using the imaging part 37. In this case, the controller 7 can set the cutting target line 8T properly on the basis of the position of the second catalyst layer 84.

The position determination part 710 may determine the respective positions of the first and second catalyst layers 83 and 84, and the controller 7 may set the cutting target line 8T on the basis of the determined positions. In this case, the controller 7 may set the cutting target line 8T using a midpoint between the barycenter position of the first catalyst layer 83 and the barycenter position of the second catalyst layer 84 as a reference, for example.

If the first or second catalyst layer 83 or 84 in the electrode layer base material 8 has a defect such as malformation, the controller 7 may exclude such a defective item from the first half-cut process by the first half-cut part 3 and may skip this item. In this case, an interval between implementations of the first half-cut process on the electrode layer base material 8 is inevitably not limited to an equal pitch.

The first or second catalyst layer 83 or 84 may be subjected to a non-defective inspection when the first or second catalyst layer 83 or 84 is formed on the electrolyte membrane 82, for example. In this case, management data indicating non-defective/defective of each first catalyst layer 83 or each second catalyst layer 84 is prepared preferably on the basis of a result of this non-defective inspection. Then, in the gasket applicator 100, the controller 7 may refer to this management data to perform the first half-cut process at the first half-cut part 3 only on a region including the first or second catalyst layer 83 or 84 determined to be "non-defective." This makes it possible to reduce the formation of an unnecessary cut-out portion 8C in the electrode layer base material 8 to allow the gasket applicator 100 to manufacture the assembly sheet with subgasket 87 efficiently. This further reduces the occurrence of bonding of the first catalyst layer 83 not to be adopted to the subgasket base material 9, thereby suppressing wasteful consumption of the subgasket base material 9.

The non-defective inspection on the first or second catalyst layer 83 or 84 may be conducted at the gasket applicator 100. In this case, a camera for capturing an image of the first or second catalyst layer 83 or 84 may be provided at a position between the first supply roller 11 and the first half-cut part 3. Then, the controller 7 may conduct non-defective inspection on the first or second catalyst layer 83 or 84 by applying an inspection technique such as pattern matching to an image acquired by the camera.

### <Flow of first half-cut process>

The first half-cut process performed in the gasket applicator 100 will be described. First, the first transport mechanism 1 transports the adopted region 8A1 including the first catalyst layer 83 determined to be non-defective at the electrode layer base material 8 to a fixed position on the suction stage 30. Then, the controller 7 controls the first transport mechanism 1 to stop movement of the electrode layer base material 8 in the transport direction DR1 (in the +X direction). Whether the adopted region 8A1 has reached the fixed position may be determined by causing a photosensor arranged at a predetermined position on the transport path 8TR to detect the passage of the intended first catalyst layer 83.

After the movement of the electrode layer base material 8 is stopped, the controller 7 starts suction of atmosphere through the suction hole 302 in the suction stage 30. By doing so, the electrode layer base material 8 is sucked on the suction surface 30S through the suction groove 301.

Next, the imaging part 37 captures an image of the first catalyst layer 83, and the position determination part 710 determines the position of the first catalyst layer 83 in the captured image. Then, the controller 7 sets the cutting target line 8T on the basis of the determined position of the first catalyst layer 83.

Next, the controller 7 moves the rotary die cutter 31 from the separated position L11 (see Fig. 10) to the half-cut position L12 (see Fig. 11). The half-cut position L12 is the position of the rotary die cutter 31 for forming the cut-out portion 8C in the electrode layer base material 8 using the pinnacle blade 311 of the rotary die cutter 31. As described above, the cutting target line 8T differs in response to the position of the first catalyst layer 83 (or second catalyst layer 84) determined by the position determination part 710. For this reason, the half-cut position L12 of the rotary die cutter 31 can change in response to the position of the first catalyst layer 83.

Before the rotary die cutter 31 moves to the half-cut position L12, the controller 7 controls the rotary drive part 32 so that the rotary die cutter 31 rotates until the pinnacle blade 311 of the rotary die cutter 31 is placed at an initial position.

As shown in Fig. 11, for example, the initial position of the pinnacle blade 311 may be a position where a blade portion (here, the width direction portion 312) of the pinnacle blade 311 to abut on a most upstream portion 8T1 of the cutting target line 8T (see Fig. 15) comes to the bottom of the rotary die cutter 31. In this case, by moving down the rotary die cutter 31 toward the -Z side and placing the rotary die cutter 31 at the half-cut position L12, the cut-out portion 8C can be formed at the most upstream portion 8T1 of the electrode layer base material 8 with the pinnacle blade 311.

When the rotary die cutter 31 comes to the half-cut position L12, the outer peripheral surface of the rotary die cutter 31 comes into contact with the upper surface of the electrode layer base material 8 (the first catalyst layer 83 or the electrolyte membrane 82) sucked on the suction stage 30. Preferably, the outer peripheral surface of the rotary die cutter 31 and the suction surface 30S of the suction stage 30 are pressed against each other with the intervention of the electrode layer base material 8 therebetween. In this state, the controller 7 causes the rotary drive part 32 and the movement drive part 33 to rotate the rotary die cutter 31 synchronously with the movement of the rotary die cutter 31 toward the upstream side (-Y side). Then, the pinnacle blade 311 is rotated by a fixed angle from the initial position to an end position to form the cut-out portion 8C in the electrode layer base material 8 along the cutting target line 8T.

The rotary die cutter 31 may be driven to rotate by frictional resistance generated between the electrode layer base material 8 and the rotary die cutter 31. In this case, after moving the pinnacle blade 311 to the initial position, the controller 7 may control the clutch 322 to cut the connection between the drive shaft and the driven shaft of the rotary shaft 31A, for example. As described above, the clutch 322 may be omitted if the rotary die cutter 31 is to rotate actively at the half-cut position L12.

When the pinnacle blade 311 rotates to the end position, the controller 7 moves up the rotary die cutter 31 toward the +Z side and moves the rotary die cutter 31 to the separated position L11 using the movement drive part 33. Next, the controller 7 releases the electrode layer base material 8 from the suction by the suction stage 30. Then, the controller 7 causes the first transport mechanism 1 to move the electrode layer base material 8 again in the transport direction DR1.

At the first half-cut part 3, the position of the rotary die cutter 31 is movable relative to the suction stage 30. This allows the blade of the rotary die cutter 31 to move relative to the electrode layer base material 8 sucked on the suction stage 30. In this way, the cut-out portion 8C can be formed at an appropriate position of the electrode layer base material 8.

In particular, in the present embodiment, the rotary die cutter 31 is movable in the X direction (transport direction DR1) and in the Y direction (width direction DR2). This allows adjustment of a position where the cut-out portion 8C is to be formed in a direction parallel to the surface of the electrode layer base material 8. In the present embodiment, the rotary die cutter 31 is movable in the Z direction (the thickness direction of the electrode layer base material 8). This allows adjustment of the depth of the cut-out portion 8C to be formed in the electrode layer base material 8.

The first half-cut part 3 cuts the electrolyte membrane 82 while leaving the first backsheet 81 unremoved at the electrode layer base material 8. Thus, during bonding to the subgasket base material 9 at the bonding mechanism 5, the membrane electrode assembly 85 formed by the first half-cut process by the first half-cut part 3 can be left on the first backsheet 81. As a result, it becomes possible to reduce the occurrence of creases at the membrane electrode assembly 85 including the first and second catalyst layers 83 and 84.

At the first half-cut part 3, the rotary shaft 31A of the rotary die cutter 31 is arranged in the width direction DR2 orthogonal to the longitudinal direction of the electrode layer base material 8. In this arrangement, moving the rotary die cutter 31 in the longitudinal direction of the electrode layer base material 8 while rotating the rotary die cutter 31 about the rotary shaft 31A allows efficient formation of the cut-out portion 8C in the electrode layer base material 8.

At the first half-cut part 3, the cutting target line 8T is decided on the basis of the position of the first catalyst layer 83 determined by the position determination part 710, and the half-cut position L12 of the rotary die cutter 31 is set to conform to the decided cutting target line 8T. This allows formation of the cut-out portion 8C accurately to conform to the position of the first catalyst layer 83.

In the gasket applicator 100, the first transport mechanism 1 transports the electrode layer base material 8 in the transport direction DR1 while moving and stopping the electrode layer base material 8 alternately on the suction stage 30. Then, while the gasket applicator 100 stops the electrode layer base material 8, the movement drive part 33 moves the rotary die cutter 31 to the half-cut position L12. This provides increased positional accuracy of the cut-out portion 8C formed in the electrode layer base material 8.

### <Configuration of bonding mechanism 5>

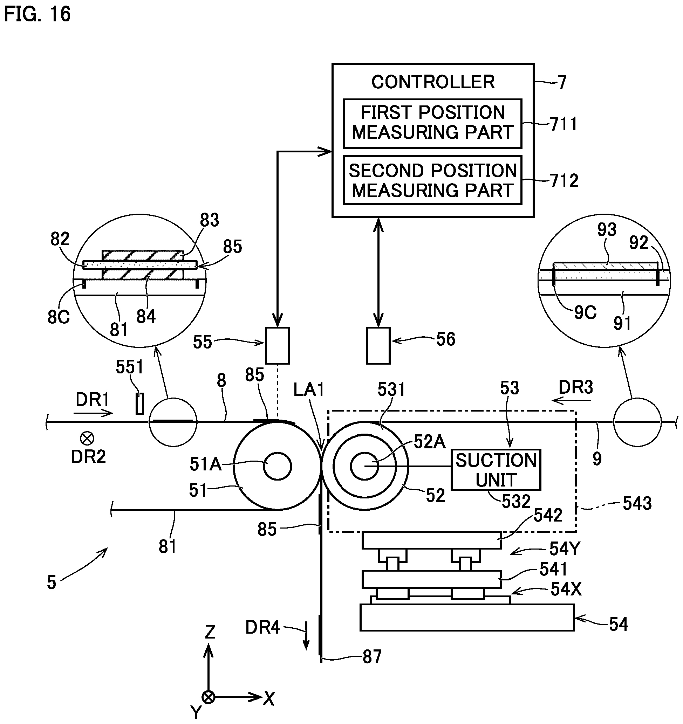

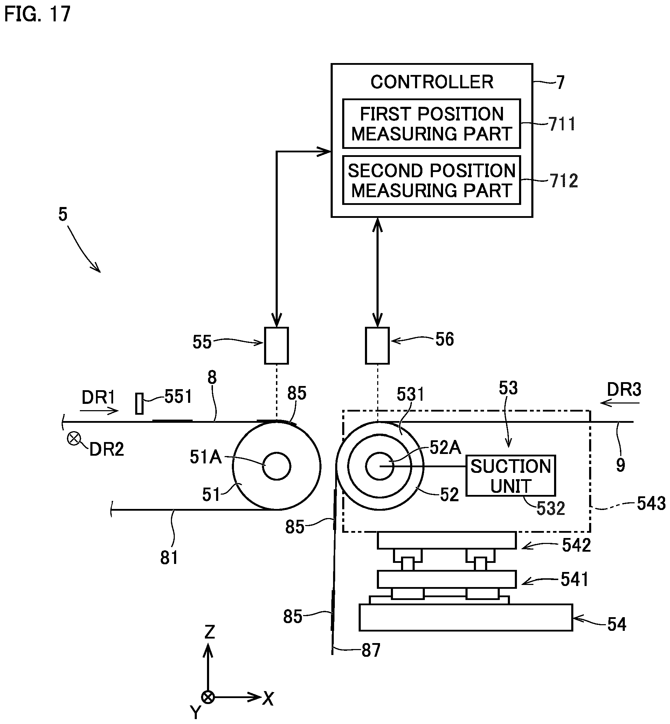

The configuration of the bonding mechanism 5 will be described by referring to Figs. 16 and 17. For the convenience of description, arrows indicating an X direction, a Y direction, and a Z direction orthogonal to each other are given in Figs. 16 and 17. The +X direction agrees with the transport direction DR1, and the -X direction agrees with the transport direction DR3. The Y direction is parallel to the width direction DR2.

Figs. 16 and 17 are side views each schematically showing the bonding mechanism 5. As described by referring to Fig. 7, the bonding mechanism 5 is a device for bonding between the electrode layer base material 8 from which a portion of the electrolyte membrane 82 in the non-adopted region 8A2 is separated and the subgasket base material 9 from which a portion of the cover film 93 in the non-corresponding region 9A2 is separated. The bonding mechanism 5 performs a positioning process described later to align the first catalyst layer 83 and the cut-out portion 9C (corresponding region 9A1) with each other. In this state, the bonding mechanism 5 bonds the electrode layer base material 8 and the subgasket base material 9 to each other. The bonding mechanism 5 includes a first bonding roller 51, a second bonding roller 52, a suction mechanism 53, a bonding roller movement drive part 54, a first imaging part 55, and a second imaging part 56.

The first bonding roller 51 is a cylindrical member having an outer peripheral surface on which the electrode layer base material 8 is to be held. The first bonding roller 51 rotates about a rotary shaft 51A extending in the width direction DR2. The first bonding roller 51 holds the electrode layer base material 8 from the first backsheet 81. The outer peripheral surface of the first bonding roller 51 may be made of rubber, for example.

The second bonding roller 52 is a cylindrical member having an outer peripheral surface on which the subgasket base material 9 is to be held. The second bonding roller 52 rotates about a rotary shaft 52A extending in the width direction DR2. The second bonding roller 52 holds the subgasket base material 9 from the second backsheet 91. The first and second bonding rollers 51 and 52 may be driven rollers to be rotated passively by frictional resistances applied from the electrode layer base material 8 and the subgasket base material 9 respectively. The first and second bonding rollers 51 and 52 may rotate actively. Namely, the first and second bonding rollers 51 and 52 may be rotated by connecting a servo motor not shown in the drawings to the rotary shafts 51A and 52A, and causing the controller 7 to control this servo motor.

The second bonding roller 52 is arranged parallel to the first bonding roller 51. The suction mechanism 53 is a mechanism to suck the subgasket base material 9 as a target of holding by the second bonding roller 52 on the outer peripheral surface of the second bonding roller 52.

The suction mechanism 53 includes a porous member 531 formed on the outer peripheral surface of the second bonding roller 52, and a suction unit 532 connected to the porous member 531. The porous member 531 has many tiny holes and is made of a porous material such as porous carbon or porous ceramic, for example. The porous ceramic is a sintered compact of alumina (Al₂O₃) or silicon carbide (SiC), for example. The porous member 531 has a pore diameter of equal to or less than 5 µm, for example, and porosity from 15 to 50%, for example.

The porous member 531 may be replaced with a metallic member that may be stainless steel such as SUS or iron. In this case, the outer surface of the metallic member is preferably given tiny suction holes by machining. To reduce the occurrence of a suction mark, the diameters of the suction holes are set at equal to or less than 2 mm, for example.

The suction unit 532 is configured using a vacuum pump, for example, and is coupled to the porous member 531 via a suction pipe. As the suction unit 532 is driven, atmosphere in the vicinity of the outer surface of the porous member 531 is sucked into the many holes. By doing so, the subgasket base material 9 is sucked on the outer peripheral surface of the second bonding roller 52 (the outer surface of the porous member 531). Here, the second bonding roller 52 holds the subgasket base material 9 under suction from the second backsheet 91. In this way, in the present embodiment, the second bonding roller 52 is configured as a suction roller.

The bonding roller movement drive part 54 moves the second bonding roller 52. The bonding roller movement drive part 54 includes an approaching/separating direction drive part 54X and an axis direction drive part 54Y. As shown in Figs. 16 and 17, the approaching/separating direction drive part 54X moves the second bonding roller 52 in a direction of moving closer to the first bonding roller 51 (-X direction) and in a direction of moving farther from the first bonding roller 51 (+X direction).

The approaching/separating direction drive part 54X includes an X axis table 541, a linear drive mechanism (a linear motor mechanism or a ball screw mechanism, for example) for moving the X axis table 541 in the X direction, a guide part for guiding the X axis table in the X direction, etc. The linear drive mechanism of the approaching/separating direction drive part 54X is electrically connected to the controller 7 and operates in response to a control signal from the controller 7.

The axis direction drive part 54Y moves the second bonding roller 52 in the Y direction parallel to the width direction DR2 (axis direction) in which the rotary shaft 52A of the second bonding roller 52 extends. The axis direction drive part 54Y includes a Y axis table 542, a linear drive mechanism (a linear motor mechanism or a ball screw mechanism, for example) for moving the Y axis table 542 in the Y direction, a guide part for guiding the Y axis table in the Y direction, etc. The linear drive mechanism of the axis direction drive part 54Y is electrically connected to the controller 7 and operates in response to a control signal from the controller 7. The axis direction drive part 54Y is placed on the X axis table 541 and moves in the X direction together with the X axis table 541.

The rotary shaft 52A of the second bonding roller 52 is coupled to the Y axis table 542 of the axis direction drive part 54Y via a coupling member 543. Thus, as the Y axis table 542 moves in the Y direction, the second bonding roller 52 moves in the Y direction. Furthermore, as the X axis table 541 moves in the X direction, the second bonding roller 52 moves in the width direction DR2.

The first imaging part 55 is arranged in such a manner as to face a surface of the electrode layer base material 8 on the +Z side (a surface at the first catalyst layer 83) held on the first bonding roller 51. The second imaging part 56 is arranged in such a manner as to face a surface of the subgasket base material 9 on the +Z side (a surface at the cover film 93) held on the second bonding roller 52. The first and second imaging parts 55 and 56 is each configured using one, or two or more cameras with image sensors. The first and second imaging parts 55 and 56 are electrically connected to the controller 7, and transmit image signals detected by the image sensors to the controller 7.

The first imaging part 55 captures an image of the surface of the electrode layer base material 8 on the +Z side (namely, the surface at the first catalyst layer 83) held on the first bonding roller 51. The second imaging part 56 captures an image of the surface of the subgasket base material 9 on the +Z side (namely, the surface at the cover film 93) held on the second bonding roller 52.

The bonding mechanism 5 includes a photosensor 551 arranged upstream of the transport direction DR1 from the first imaging part 55. The photosensor 551 is of a reflective type, for example, and detects light reflected on the first catalyst layer 83 of the electrode layer base material 8. The photosensor 551 may be of a transmission type, for example. The photosensor 551 is electrically connected to the controller 7 and outputs a detection signal. On the basis of the detection signal from the photosensor 551, the controller 7 determines that the first catalyst layer 83 has reached a point of measurement by the photosensor 551. The controller 7 can measure the length dimension of the first catalyst layer 83 in the X direction (transport direction DR1) on the basis of a distance the electrode layer base material 8 has traveled from the start of detection of the first catalyst layer 83 to the end of the detection by the photosensor 551.

As shown in Fig. 16, the controller 7 functions as a first position measuring part 711 and a second position measuring part 712. The first and second position measuring parts 711 and 712 are functions realized as software by causing the processor 71 to execute the computer program P. The first and second position measuring parts 711 and 712 may be hardware configurations such as application-specific integrated circuits.

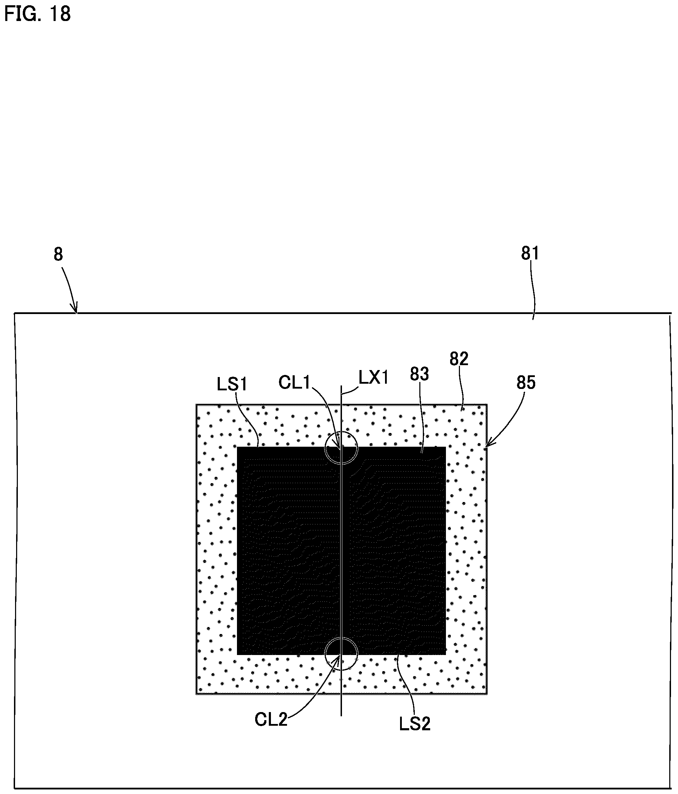

Fig. 18 is a plan view schematically showing the membrane electrode assembly 85 on the electrode layer base material 8. The first position measuring part 711 determines the position of the electrode layer base material 8 on the basis of an image acquired by the first imaging part 55. More specifically, the first position measuring part 711 determines the position of the first catalyst layer 83 (a position in the transport direction DR1 and a position in the width direction DR2) in the image acquired by the first imaging part 55. As shown in Fig. 18, for example, the first position measuring part 711 measures the position of a crossing CL1 and the position of a crossing CL2 of a center line LX1 of the first catalyst layer 83 in the transport direction DR1 with a side LS1 and a side LS2 respectively of the first catalyst layer 83 parallel to the X direction. The position of the center line LX1 may be determined on the basis of the length dimension of the first catalyst layer 83 in the X direction, for example. The sides LS1 and LS2 are preferably detected by performing publicly-known image processing such as binarization or edge extraction on the image captured by the first imaging part 55, for example. The first position measuring part 711 may determine the center of the positions of the crossings CL1 and CL2 as the position of the first catalyst layer 83.

The first position measuring part 711 may detect the four corners 831 to 834 (see Fig. 15) or the four sides of the first catalyst layer 83, and determine the position of the first catalyst layer 83 on the basis of the positions of these portions.

The second position measuring part 712 determines the position of the subgasket base material 9 on the basis of an image acquired by the second imaging part 56. More specifically, the second position measuring part 712 detects the cut-out portion 9C formed in the subgasket base material 9 in the image acquired by the second imaging part 56. Then, on the basis of the detected position, the second position measuring part 712 determines the position of the cut-out portion 9C (a position in the transport direction DR1 and a position in the width direction DR2).

As shown in Fig. 17, while bonding is not performed between the first and second bonding rollers 51 and 52, the first and second bonding rollers 51 and 52 are separated from each other in the X direction. In this state, the electrode layer base material 8 and the subgasket base material 9 are aligned with each other. As shown in Fig. 16, for implementation of bonding between the first and second bonding rollers 51 and 52, the first and second bonding rollers 51 and 52 are moved closer to each other. At a bonding position LA1 where the first and second bonding rollers 51 and 52 are at positions closest to each other, the electrode layer base material 8 and the subgasket base material 9 are bonded to each other to form a bonded body. In the gasket applicator 100, immediately after the bonded body is formed at the bonding position LA1, the first backsheet 81 is detached from the electrode layer base material 8. By doing so, the assembly sheet with subgasket 87 is obtained including the membrane electrode assemblies 85 at regular intervals (shown in Fig. 8). The assembly sheet with subgasket 87 is carried in a transport direction DR4 and collected on the sheet collection roller 6.

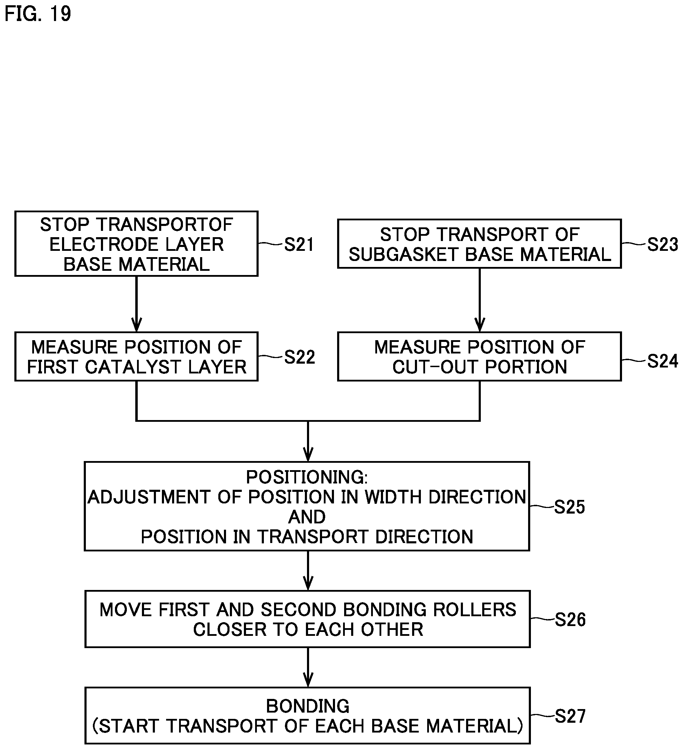

Fig. 19 shows a flow of the bonding process performed by the bonding mechanism 5. First, the first transport mechanism 1 transports the electrode layer base material 8 in the +X direction. By doing so, the first catalyst layer 83 as a bonding target (namely, the adopted region 8A1) is detected by the photosensor 551. The controller 7 stores start time of the detection into the memory 72. The controller 7 may store a movement amount of the electrode layer base material 8 into the memory 72 as the length dimension of the first catalyst layer 83 in the X direction by which the electrode layer base material 8 has moved from the start time of the detection to finish time of the detection when detection of the first catalyst layer 83 is finished.

When the first catalyst layer 83 reaches a position of imaging by the first imaging part 55, the controller 7 stops transport of the electrode layer base material 8 by the first transport mechanism 1 (step S21). Then, the first position measuring part 711 of the controller 7 determines the position of the first catalyst layer 83 on the basis of an image acquired by the first imaging part 55 (step S22).

When the cut-out portion 9C reaches a position of imaging by the second imaging part 56, the controller 7 stops transport of the subgasket base material 9 by the second transport mechanism 2 (step S23). Then, the second position measuring part 712 of the controller 7 determines the position of the cut-out portion 9C (corresponding region 9A1) on the basis of an image acquired by the second imaging part 56 (step S24).

The controller 7 performs the processes in step S23 and step S24 in parallel with the processes in step S21 and step S22.

Next, the controller 7 performs the positioning process (step S25). Specifically, to compensate for positional deviation between the first catalyst layer 83 and the cut-out portion 9C in the width direction DR2 (axis direction), the controller 7 controls the axis direction drive part 54Y to move the second bonding roller 52 in the width direction DR2 (axis direction).

To compensate for positional deviation between the first catalyst layer 83 and the cut-out portion 9C in each of the transport directions DR1 and DR3, the controller 7 controls the first or second transport mechanism 1 or 2. As a result, one of the electrode layer base material 8 and the subgasket base material 9 is transported. By doing so, the first catalyst layer 83 and the cut-out portion 9C can be aligned with each other at the bonding position LA1 (contact position) in the bonding mechanism 5.

When the positioning process in step S25 is finished, the controller 7 moves the second bonding roller 52 closer to the first bonding roller 51 (step S26). By doing so, the electrode layer base material 8 and the subgasket base material 9 are brought into contact with each other at the bonding position LA1 between the first and second bonding rollers 51 and 52.

Next, the controller 7 restarts to transport the electrode layer base material 8 and the subgasket base material 9 using the first and second transport mechanisms 1 and 2. As a result, bonding between the electrode layer base material 8 and the subgasket base material 9 is started at the bonding mechanism 5. As a result of the positioning process in step S25, this bonding proceeds while the first catalyst layer 83 (adopted region 8A1) and the cut-out portion 9C (corresponding region 9A1) are aligned with each other.

In the gasket applicator 100 of the present embodiment, the subgasket base material 9 can be held fixedly under suction by the second bonding roller 52 moving in the width direction DR2 (axis direction). This makes it possible to reduce the occurrence of positional deviation of the subgasket base material 9 on the second bonding roller 52 to be caused when the second bonding roller 52 is moved in the width direction DR2. As a result, it becomes possible to align the electrode layer base material 8 and the subgasket base material 9 with each other with higher accuracy in the width direction DR2, thereby allowing the subgasket base material 9 to be applied favorably to the electrode layer base material 8.

The second bonding roller 52 for holding the subgasket base material 9 under suction is moved in the approaching/separating direction relative to the first bonding roller 51. This makes it possible to reduce the occurrence of positional deviation of the subgasket base material 9 on the second bonding roller 52 to be caused when the second bonding roller 52 is moved in the approaching/separating direction.

In the present embodiment, the suction mechanism 53 is provided for the second bonding roller 52 to hold the subgasket base material 9. However, this is not an absolute necessity. Specifically, the porous member 531 may be formed on the outer peripheral surface of the first bonding roller 51 to hold the electrode layer base material 8, and the electrode layer base material 8 may be held under suction on the first bonding roller 51. In another case, the bonding roller movement drive part 54 may be coupled to the first bonding roller 51 to move the first bonding roller 51 in the axis direction (width direction DR2) and in the approaching/separating direction (X direction).

While the invention has been shown and described in detail, the foregoing description is in all aspects illustrative and does not limit the invention. It is therefore understood that numerous modifications not shown can be devised without departing from the scope of the invention. The components described in the foregoing embodiment and in the modification may be combined together or omitted, as appropriate, without inconsistencies.

### Reference Signs List

100 Gasket applicator (manufacturing device for membrane electrode assembly)
1 First transport mechanism
3 First half-cut part
30 Suction stage
301 Suction groove
302 Suction hole
30S Suction surface
31 Rotary die cutter
31A Rotary shaft
32 Rotary drive part
33 Movement drive part
37 Imaging part
7 Controller
710 Position determination part
8 Electrode layer base material
80 Membrane electrode assembly layer
81 First backsheet
82 Electrolyte membrane
83 First catalyst layer
84 Second catalyst layer
85 Membrane electrode assembly
8C Cut-out portion
8T Cutting target line
9 Subgasket base material
DR2 Width direction
L12 Half-cut position

## Claims

1. A manufacturing device (100) for a membrane electrode assembly (85) comprising:
a suction stage (30) that sucks an electrode layer base material (8) from an elongated strip-shaped first backsheet (81), said electrode layer base material (8) including said first backsheet (81), an electrolyte membrane (82), and a first catalyst layer (83) provided on a part of a surface of said electrolyte membrane (82) arranged in the order named;
a cylindrical rotary die cutter (31) with a blade (311) used for forming a cut-out portion (8C) in said electrode layer base material (8) along a cutting target line (8T) around said first catalyst layer (83);
a rotary drive part (32) that rotates said rotary die cutter (31) about a rotary shaft (31A); and
a movement drive part (33) that moves said rotary die cutter (31) relative to said suction stage (30) to a half-cut position (L12) where said blade (311) reaches an intermediate portion of said first backsheet (81) in a thickness direction at said electrode layer base material (8) sucked by said suction stage (30) when said rotary die cutter (31) rotates.

2. The manufacturing device (100) for the membrane electrode assembly (85) according to claim 1, wherein
said electrode layer base material (8) further includes a second catalyst layer (84) provided on a part of a surface of said electrolyte membrane (82) adjacent to said first backsheet (81) and overlapping said first catalyst layer (83) in a thickness direction.

3. The manufacturing device (100) for the membrane electrode assembly (85) according to claim 1 or 2, wherein
said rotary shaft (31A) is arranged in a width direction orthogonal to a longitudinal direction of said electrode layer base material (8) sucked by said suction stage (30).

4. The manufacturing device (100) for the membrane electrode assembly (85) according to any one of claims 1 to 3, further comprising:
a position determination part (710) that determines the position of said first catalyst layer (83), wherein
said movement drive part (33) moves said rotary die cutter (31) to said half-cut position (L12) responsive to the position of said first catalyst layer (83) determined by said position determination part (710).

5. The manufacturing device (100) for the membrane electrode assembly (85) according to claim 4, further comprising:
an imaging part (37) that captures an image of said first catalyst layer (83) of said electrode layer base material (8), wherein
said position determination part (710) determines the position of said first catalyst layer (83) on the basis of an image acquired by said imaging part (37).

6. The manufacturing device (100) for the membrane electrode assembly (85) according to any one of claims 1 to 5, wherein
said suction stage (30) includes:
a suction groove (301) provided at a surface of said suction stage (30) for suction of said electrode layer base material (8); and
a suction hole (302) provided inside said suction groove (301) and used for suction of atmosphere.

7. The manufacturing device (100) for the membrane electrode assembly (85) according to claim 6, wherein
said suction groove (301) includes a recess (303, 304) extending in a direction intersecting said cutting target line (8T).

8. The manufacturing device (100) for the membrane electrode assembly (85) according to claim 7, further comprising:
a transport mechanism that transports said electrode layer base material (8) while moving and stopping said electrode layer base material (8) alternately on said suction stage (30), wherein
while said transport mechanism stops said electrode layer base material (8), said movement drive part (33) moves said rotary die cutter (31) to said half-cut position (L12).

9. A manufacturing method for a membrane electrode assembly (85) comprising the steps of:
(a) preparing an electrode layer base material (8) including an elongated strip-shaped first backsheet (81), an elongated strip-shaped electrolyte membrane (82) provided on one side of said first backsheet (81), and a first catalyst layer (83) provided on a part of a surface of said electrolyte membrane (82) on one side;
(b) sucking said electrode layer base material (8) from a side with said first backsheet (81) to a suction stage (30);
(c) moving a cylindrical rotary die cutter (31) with a blade (311) relative to said suction stage (30) to a half-cut position (L12), said blade (311) having a shape responsive to a cutting target line (8T) defined around said first catalyst layer (83); and
(d) forming a cut-out portion (8C) in said electrode layer base material (8) along said cutting target line (8T) by rotating said rotary die cutter (31) at said half-cut position (L12) about a rotary shaft (31A) to cause said blade (311) to reach an intermediate portion of said first backsheet (81) in a thickness direction from one side of said first catalyst layer (83).

## Patentansprüche

1. Herstellungsvorrichtung (100) für eine Membranelektrodenanordnung (85), umfassend:
eine Saugstufe (30), die ein Elektrodenschichtbasismaterial (8) von einer länglichen streifenförmigen ersten Unterschicht (81) ansaugt, wobei das Elektrodenschichtbasismaterial (8) die erste Unterschicht (81), eine Elektrolytmembran (82) und eine erste Katalysatorschicht (83), die auf einem Teil einer Oberfläche der Elektrolytmembran (82) vorgesehen ist, umfasst, die in der genannten Reihenfolge angeordnet sind;
eine zylindrische Rotationsstanze (31) mit einer Klinge (311), die zum Bilden eines ausgeschnittenen Abschnitts (8C) in dem Elektrodenschichtbasismaterial (8) entlang einer Schneidziellinie (8T) um die erste Katalysatorschicht (83) herum verwendet wird;
ein Rotationsantriebsteil (32), das die Rotationsstanze (31) um eine Rotationsachse (31A) dreht; und
ein Bewegungsantriebsteil (33), das die Rotationsstanze (31) relativ zu der Saugstufe (30) zu einer Halbschnittposition (L12) bewegt, an der die Klinge (311) einen Zwischenabschnitt der ersten Unterschicht (81) in einer Dickenrichtung an dem Elektrodenschichtbasismaterial (8) erreicht, das von der Saugstufe (30) angesaugt wird, wenn sich die Rotationsstanze (31) dreht.

2. Herstellungsvorrichtung (100) für die Membranelektrodenanordnung (85) nach Anspruch 1, wobei
das Elektrodenschichtbasismaterial (8) ferner eine zweite Katalysatorschicht (84) umfasst, die auf einem Teil einer Oberfläche der Elektrolytmembran (82) benachbart zu der ersten Unterschicht (81) vorgesehen ist und die erste Katalysatorschicht (83) in einer Dickenrichtung überlappt.

3. Herstellungsvorrichtung (100) für die Membranelektrodenanordnung (85) nach Anspruch 1 oder 2, wobei
die Rotationsachse (31A) in einer Breitenrichtung orthogonal zu einer Längsrichtung des Elektrodenschichtbasismaterials (8) angeordnet ist, das von der Saugstufe (30) angesaugt wird.

4. Herstellungsvorrichtung (100) für die Membranelektrodenanordnung (85) nach einem der Ansprüche 1 bis 3, ferner umfassend:
ein Positionsbestimmungsteil (710), das die Position der ersten Katalysatorschicht (83) bestimmt, wobei
das Bewegungsantriebsteil (33) die Rotationsstanze (31) in Reaktion auf die Position der ersten Katalysatorschicht (83), die von dem Positionsbestimmungsteil (710) bestimmt wird, zu der Halbschnittposition (L12) bewegt.

5. Herstellungsvorrichtung (100) für die Membranelektrodenanordnung (85) nach Anspruch 4, ferner umfassend:
ein Bildgebungsteil (37), das ein Bild der ersten Katalysatorschicht (83) des Elektrodenschichtbasismaterials (8) aufnimmt, wobei
das Positionsbestimmungsteil (710) die Position der ersten Katalysatorschicht (83) auf der Grundlage eines Bildes bestimmt, das von dem Bildgebungsteil (37) erfasst wird.

6. Herstellungsvorrichtung (100) für die Membranelektrodenanordnung (85) nach einem der Ansprüche 1 bis 5, wobei
die Saugstufe (30) umfasst:
eine Saugnut (301), die an einer Oberfläche der Saugstufe (30) zum Ansaugen des Elektrodenschichtbasismaterials (8) vorgesehen ist; und
ein Saugloch (302), das innerhalb der Saugnut (301) vorgesehen ist und zum Ansaugen der Atmosphäre verwendet wird.

7. Herstellungsvorrichtung (100) für die Membranelektrodenanordnung (85) nach Anspruch 6, wobei
die Saugnut (301) eine Aussparung (303, 304) umfasst, die sich in einer Richtung erstreckt, die die Schneidziellinie (8T) schneidet.

8. Herstellungsvorrichtung (100) für die Membranelektrodenanordnung (85) nach Anspruch 7, ferner umfassend:
einen Transportmechanismus, der das Elektrodenschichtbasismaterial (8) transportiert, während er das Elektrodenschichtbasismaterial (8) abwechselnd auf der Saugstufe (30) bewegt und stoppt, wobei,
während der Transportmechanismus das Elektrodenschichtbasismaterial (8) stoppt, das Bewegungsantriebsteil (33) die Rotationsstanze (31) zu der Halbschnittposition (L12) bewegt.

9. Herstellungsverfahren für eine Membranelektrodenanordnung (85), umfassend die Schritte:
(a) Vorbereiten eines Elektrodenschichtbasismaterials (8), das eine längliche streifenförmige erste Unterschicht (81), eine längliche streifenförmige Elektrolytmembran (82), die auf einer Seite der ersten Unterschicht (81) vorgesehen ist, und eine erste Katalysatorschicht (83), die auf einem Teil einer Oberfläche der Elektrolytmembran (82) auf einer Seite vorgesehen ist, umfasst;
(b) Ansaugen des Elektrodenschichtbasismaterials (8) von einer Seite mit der ersten Unterschicht (81) zu einer Saugstufe (30);
(c) Bewegen einer zylindrischen Rotationsstanze (31) mit einer Klinge (311) relativ zu der Saugstufe (30) zu einer Halbschnittposition (L12), wobei die Klinge (311) eine Form aufweist, die auf eine Schneidziellinie (8T) reagiert, die um die erste Katalysatorschicht (83) herum definiert ist; und
(d) Bilden eines ausgeschnittenen Abschnitts (8C) in dem Elektrodenschichtbasismaterial (8) entlang der Schneidziellinie (8T) durch Drehen der Rotationsstanze (31) an der Halbschnittposition (L12) um eine Rotationsachse (31A), um zu bewirken, dass die Klinge (311) einen Zwischenabschnitt der ersten Unterschicht (81) in einer Dickenrichtung von einer Seite der ersten Katalysatorschicht (83) erreicht.

## Revendications

1. Appareil de fabrication (100) pour un ensemble d'électrodes à membrane (85) comprenant :
un étage d'aspiration (30) aspirant un matériau de base de couche d'électrode (8) sur une première feuille de support allongée en forme de bande (81), ledit matériau de base de couche d'électrode (8) comprenant ladite première feuille de support (81), une membrane électrolytique (82), et une première couche catalytique (83) disposée sur une partie d'une surface de ladite membrane électrolytique (82) agencée dans l'ordre indiqué ;
une découpeuse rotative cylindrique (31) dotée d'une lame (311) utilisée pour la formation d'une partie évidée (8C) dans ledit matériau de base de couche d'électrode (8) le long d'une ligne de coupe cible (8T) autour de ladite première couche catalytique (83) ;
un module d'entraînement rotatif (32) assurant la rotation de ladite découpeuse rotative (31) autour d'un arbre rotatif (31A) ; et
un module d'entraînement du déplacement (33) assurant le déplacement de ladite découpeuse rotative (31) relativement audit étage d'aspiration (30) jusqu'à une position de demi-coupe (L12) où ladite lame (311) atteint une partie intermédiaire de ladite première feuille de support (81) dans un sens de l'épaisseur audit matériau de base de couche d'électrode (8) aspiré par ledit étage d'aspiration (30) lors de la rotation de ladite découpeuse rotative (31).

2. Appareil de fabrication (100) pour l'ensemble d'électrodes à membrane (85) selon la revendication 1,
ledit matériau de base de couche d'électrode (8) comprenant en outre une deuxième couche catalytique (84) disposée sur une partie d'une surface de ladite membrane électrolytique (82) adjacente à ladite première feuille de support (81), et chevauchant ladite première couche catalytique (83) dans un sens de l'épaisseur.

3. Appareil de fabrication (100) pour l'ensemble d'électrodes à membrane (85) selon la revendication 1 ou 2,
ledit arbre rotatif (31A) étant agencé dans un sens de la largeur perpendiculaire à une direction longitudinale dudit matériau de base de couche d'électrode (8) aspiré par ledit étage d'aspiration (30).

4. Appareil de fabrication (100) pour l'ensemble d'électrodes à membrane (85) selon une quelconque des revendications 1 à 3, comprenant en outre :
un élément de détermination de la position (710) déterminant la position de ladite première couche catalytique (83),
ledit module d'entraînement du déplacement (33) déplaçant ladite découpeuse rotative (31) jusqu'à ladite position de demi-coupe (L12) en fonction de la position de ladite première couche catalytique (83) déterminée par ledit élément de détermination de la position (710).

5. Appareil de fabrication (100) pour l'ensemble d'électrodes à membrane (85) selon la revendication 4, comprenant en outre :
un élément d'imagerie (37) saisissant une image de ladite première couche catalytique (83) dudit matériau de base de couche d'électrode (8),
ledit élément de détermination de la position (710) déterminant la position de ladite première couche catalytique (83) en fonction d'une image saisie par ledit élément d'imagerie (37).

6. Appareil de fabrication (100) pour l'ensemble d'électrodes à membrane (85) selon une quelconque des revendications 1 à 5,
ledit étage d'aspiration (30) comprenant :
une cannelure d'aspiration (301) agencée sur une surface dudit étage d'aspiration (30) pour l'aspiration dudit matériau de base de couche d'électrode (8) ; et
un orifice d'aspiration (302) disposé à l'intérieur de ladite cannelure d'aspiration (301) et utilisé pour l'aspiration de l'air ambiant.

7. Appareil de fabrication (100) pour l'ensemble d'électrodes à membrane (85) selon la revendication 6,
ladite cannelure d'aspiration (301) comprenant un évidement (303, 304) s'étendant dans une direction croisant ladite ligne de coupe cible (8T).

8. Appareil de fabrication (100) pour l'ensemble d'électrodes à membrane (85) selon la revendication 7,
un mécanisme de transport transportant ledit matériau de base de couche d'électrode (8) tout en déplaçant et en arrêtant tour à tour ledit matériau de base de couche d'électrode (8) sur ledit étage d'aspiration (30),
ledit mécanisme de transport arrêtant ledit matériau de base de couche d'électrode (8), ledit module d'entraînement du déplacement (33) déplaçant ladite découpeuse rotative (31) jusqu'à ladite position de demi-coupe (L12).

9. Procédé de fabrication d'un ensemble d'électrodes à membrane (85) comprenant les étapes suivantes :
(a) préparation d'un matériau de base de couche d'électrode (8) comprenant une première feuille de support allongée en forme de bande (81), une membrane électrolytique allongée en forme de bande (82) agencée sur un côté de ladite première feuille de support (81), et une première couche catalytique (83) disposée sur une partie d'une surface de ladite membrane électrolytique (82) sur un côté ;
(b) aspiration dudit matériau de base de couche d'électrode (8) d'un côté avec ladite première feuille de support (81) jusqu'à un étage d'aspiration (30) ;
(c) déplacement d'une découpeuse rotative cylindrique (31) dotée d'une lame (311) relativement audit étage d'aspiration (30) jusqu'à une position de demi-coupe (L12), ladite lame (311) présentant une forme tributaire d'une ligne de coupe cible (8T) définie autour de ladite première couche catalytique (83) ; et
(d) formation d'une partie évidée (8C) dans ledit matériau de base de couche d'électrode (8) le long d'une ligne de coupe cible (8T) par la rotation de ladite découpeuse rotative (31) à ladite position de demi-coupe (L12) autour d'un arbre rotatif (31A), de sorte que ladite lame (311) atteigne une partie intermédiaire de ladite première feuille de support (81) dans un sens de l'épaisseur d'un côté de ladite première couche catalytique (83).
